# EUROPÄISCHE PATENTSCHRIFT

(11) **EP 4 396 750 B1**
(45) Veröffentlichungstag und Bekanntmachung des Hinweises auf die Patenterteilung: **16.07.2025**
(21) Anmeldenummer: 22809762.2
(22) Anmeldetag: 26.10.2022
(51) Int. Cl.: G06Q 10/083

(54) **VERFAHREN UND ÜBERGABEVORRICHTUNG ZUR ÜBERGABE VON WARENOBJEKTEN**
METHOD AND TRANSFER APPARATUS FOR TRANSFERRING COMMODITY OBJECTS
PROCÉDÉ ET APPAREIL DE TRANSFERT POUR TRANSFÉRER DES OBJETS DE MARCHANDISE

(30) Priorität: 28.10.2021 DE 102021128214
(43) Veröffentlichungstag der Anmeldung: 10.07.2024
(73) Patentinhaber: Innovative Robot Delivery GmbH, 53121 Bonn (DE)
(72) Erfinder: SCHARES, Christof, 53127 Bonn (DE); MAYER, Boris, 53129 Bonn (DE); BORGER, Christian, 53121 Bonn (DE)
(74) Vertreter: Jostarndt Patentanwalts-AG
(86) Internationale Anmeldenummer: PCT/EP2022/079926
(87) Internationale Veröffentlichungsnummer: WO 2023/073012

(56) Entgegenhaltungen:
- CN-A- 107 742 375
- CN-A- 108 510 223
- CN-B- 106 204 946
- CN-B- 106 204 946
- CN-U- 212 767 662
- US-A- 5 540 536
- US-A1- 2017 308 098
- US-A1- 2019 031 075
- US-A1- 2020 361 711

## Beschreibung

Die vorliegende Erfindung betrifft ein Verfahren und eine Übergabevorrichtung zur Übergabe von Warenobjekten.

### Darstellung des Standes der Technik

Im Stand der Technik sind Systeme bekannt, welche es ermöglichen, eine Vielzahl von in Paketen befindlichen Warenobjekten an eine Vielzahl von Empfängern auszuliefern bzw. Pakete von einer Vielzahl von Versendern entgegenzunehmen.

Es besteht ein großes Bedürfnis, den hierdurch hervorgerufenen ökologischen Fußabdruck zu verringern.

Bekannte Lösungen zielen auf eine Verbesserung der Transport- und Übergabelogistik ab, zum Beispiel durch den Einsatz elektronischer Paketfachanlagen, mittels derer Übergaben von Paketen erfolgen. So beschreibt die US 2020/0361711 ein automatisiertes temperaturgesteuertes Außenterminal für die Lagerung und Übergabe von Online-Lebensmittelbestellungen.

Andere bekannte Lösungen zielen auf den Einsatz von Mehrwegbehältern beim Paketversand ab. Bisher sind diese Lösungen daran gescheitert, dass kein geschlossener Kreislauf der Mehrwegbehälter von Versendern zu Empfängern etabliert werden konnte. Hier setzt die im Folgenden beschriebene Erfindung an.

### Kurzdarstellung der Erfindung

Der Erfindung liegt die Aufgabe zu Grunde, ein Verfahren zur Übergabe von Warenobjekten bereitzustellen, so dass Warenobjekte mit einem möglichst geringen ökologischen Fußabdruck übergeben werden können.

Erfindungsgemäß wird diese Aufgabe durch ein Verfahren zur Übergabe von Paketen gemäß Anspruch 1 gelöst.

Vorteilhafte Weiterbildungen der Erfindung sind Gegenstand der abhängigen Ansprüche.

### Darstellung der Erfindung

Erfindungsgemäß wird ein Verfahren zur Übergabe einer Vielzahl von Warenobjekten an mehrere Empfänger bereitgestellt, wobei die Warenobjekte in Paketen gelagert und/oder transportiert werden und in eine Depoteinrichtung transferiert werden und dann in der Depoteinrichtung gelagert werden.

Die Erfindung zeichnet sich dadurch aus, dass bei wenigstens einem Teil der Pakete jeweils mindestens ein in dem Paket befindliches Warenobjekt einem Empfänger zur Entnahme zur Verfügung gestellt wird, so dass eine Übergabe des Warenobjekts als Übergabevorgang durchgeführt wird, eine Übergabe des Pakets jedoch verhindert wird, so dass das Paket, das nicht an den Empfänger des Warenobjektes übergeben wird, in der Depoteinrichtung verbleibt, dass das Paket nach dem Übergabevorgang mit mindestens einem weiteren Warenobjekt befüllt wird und für einen weiteren Übergabevorgang für das weitere Warenobjekt an einen weiteren Empfänger eingesetzt wird.

Die Erfindung sieht vor, dass mindestens einzelne Pakete nach der Entnahme des Warenobjektes innerhalb der Depoteinrichtung erneut mit mindestens einem weiteren Warenobjekt beladen werden. Erfindungsgemäß wird das mit dem weiteren Warenobjekt beladene Paket in der Depoteinrichtung für einen Übergabevorgang für das weitere Warenobjekt eingesetzt.

Eine Weiterleitung wenigstens eines weiteren Teils der Pakete ohne eine unmittelbare erneute Befüllung innerhalb der Depoteinrichtung ist gleichfalls vorteilhaft. In diesem Fall wird das Paket zu einem Einlieferer weiterer Warenobjekte und/oder zu einer Kommissioniereinrichtung transportiert. Zweckmäßigerweise werden die Pakete nach Erreichen des Einlieferers beziehungsweise der Kommissioniereinrichtung erneut mit Warenobjekten befüllt und als neue Pakete in das Logistiksystem eingeliefert.

Warenobjekte sind physische Gegenstände, auf die physisch von dem Logistiksystem oder einer Komponente des Logistiksystems eingewirkt werden kann und die dann in einen physischen Zugriff einer anderen Entität übergeben werden. Die andere Entität kann ein Empfänger der Ware sein oder eine physische Einrichtung, die so ausgestaltet ist, dass sie für den Empfänger physische Einwirkungsmöglichkeiten ausüben kann. In verschiedenen Ausführungsformen der Erfindung, beispielsweise in Ausgestaltungen der in dieser Anmeldung dargestellten Depoteinrichtungen als Verkaufseinrichtungen, ist es zweckmäßig, dass der Übergang der physischen Verfügbarkeit über das Warenobjekt dann erfolgt, wenn zuvor der Empfänger das Warenobjekt erworben hat. Als Warenobjekte kommen Gegenstände des täglichen Bedarfs wie Verbrauchsmaterialien oder Lebensmittel ebenso in Frage wie technische Gegenstände und Gerätschaften.

Sofern Pakete in der vorliegenden Anmeldung nicht ausdrücklich als Datenpakete oder virtuelle Pakete bezeichnet werden, handelt es sich bei den in dieser Anmeldung dargestellten Paketen um physische Pakete. Pakete im Sinne der Erfindung sind Gegenstände, in denen Warenobjekte gelagert und/oder transportiert werden. Bei in einzelnen Paketen enthaltenen Warenobjekten kann es sich um Gegenstände des täglichen Bedarfs wie Verbrauchsmaterialien oder Lebensmittel handeln, ebenso wie technische Gegenstände und Gerätschaften. Vorzugsweise bei mehreren der Warenobjekte handelt es sich um unverpackte Gegenstände, verpackte Gegenstände und umverpackte Gegenstände, wobei bei verpackten und umverpackten Gegenständen das Paket die Verpackung bzw. Umverpackung und den darin verpackten Gegenstand umfasst. Bei wenigstens einem Teil der in dieser Anmeldung dargestellten Warenobjekte sind nicht die Warenobjekte selbst Pakete, sondern es sind Gegenstände, die in Pakete eingebracht werden, wobei ein Teil der Pakete als Mehrwegbehälter ausgebildet ist.

Wenigstens ein Teil dieser Pakete ist demnach so ausgestaltet, dass das Paket selbst kein Warenobjekt ist, sondern dass das Paket so gestaltet ist, dass es eine Umverpackung für das Warenobjekt darstellt und dass das Warenobjekt aus dem Paket entnehmbar ist. Diese als Mehrwegbehälter bezeichneten Umverpackungen sind sowohl mit als auch ohne Inhalt Pakete im Sinne der Anmeldung.

Erfindungsgemäß wird die der Erfindung zu Grunde liegende Aufgabe ferner dadurch gelöst, dass eine Übergabevorrichtung zur Übergabe von in Paketen befindlichen Warenobjekten so ausgestaltet wird, dass bei wenigstens einem Teil der Pakete jeweils mindestens ein in dem Paket befindliches Warenobjekt einem Empfänger zur Entnahme zur Verfügung gestellt werden kann, so dass eine Übergabe des Warenobjekts als Übergabevorgang durchgeführt werden kann, und dass die Übergabevorrichtung ein Mittel enthält, das eine Übergabe des Pakets verhindern kann.

Erfindungsgemäß ist die Übergabevorrichtung im Bereich der Depoteinrichtung angeordnet.

Die in dieser Anmeldung dargestellten Depoteinrichtungen sind vorzugsweise als mobile Depoteinrichtungen eingerichtet. Die Erfindung ist jedoch nicht auf mobile Depoteinrichtungen beschränkt. Depoteinrichtungen im Sinne der vorliegenden Erfindung sind alle Einrichtungen, die ein Mittel zur Lagerung der Pakete, insbesondere innerhalb eines vorgesehenen Übergabezeitraums, und wenigstens ein Mittel zur Übergabe der Pakete enthalten. Es handelt sich hierbei um vorzugsweise schließfachartig ausgebildete Depoteinrichtungen, die eine Kombination einer sicheren, zuverlässigen und vor äußeren Einwirkungen geschützten Lagerung der Pakete mit einer zuverlässig automatisiert auf Erhalt einer empfangenen Ausgabeaufforderung reagierenden Übergabevorrichtung für die Übergabe der Pakete beinhalten, insbesondere während eines vorgesehenen Übergabezeitraums. Die vor äußeren Einwirkungen geschützte Lagerung der Pakete beinhaltet vorzugsweise eine Verhinderung des Zugriffs von Personen auf die Pakete. Die Depoteinrichtungen beinhalten somit einen in ihrem Regelbetrieb vorzugsweise durch eine Warenschleuse für die Pakete zugänglichen Lagerraum. Insbesondere enthalten die Depoteinrichtungen Mittel zum Schutz der Pakete vor einer unbefugten Entnahme. Übergabeeinrichtungen im Sinne der vorliegenden Anmeldung können gegebenenfalls auch die Lagerfächer selbst sein, sofern diese mit einer Tür versehen sind, die sich nur nach Durchführung eines Freigabevorgangs öffnen lässt.

Die Erfindung sieht ferner vor, ein Verfahren zur Übergabe einer Vielzahl von Warenobjekten an mehrere Empfänger, wobei die Warenobjekte in Paketen gelagert und/oder transportiert werden, so durchzuführen, dass bei wenigstens einem Teil der Pakete jeweils mindestens ein in dem Paket befindliches Warenobjekt einem Empfänger zur Entnahme zur Verfügung gestellt wird, so dass eine Übergabe des Warenobjekts als erster Übergabevorgang durchgeführt wird, dass mindestens einzelne Pakete als Mehrwegbehälter ausgebildet sind, die mit individuellen Kennungen versehen sind und dass den Mehrwegbehältern in Abhängigkeit von weiteren Informationen Paketidentifikationscodes zugeordnet werden.

Die Erfindung zeichnet sich dadurch aus, dass dem mit der individuellen Kennung gekennzeichneten Mehrwegbehälter bis zu einer ersten Übergabe eines in ihm befindlichen Warenobjektes an einen ersten Empfänger ein erster Paketidentifikationscode zugeordnet wird und dass dem mit der individuellen Kennung versehenen Mehrwegbehälter nach Befüllung mit wenigstens einem weiteren Warenobjekt ein neuer Paketidentifikationscode zugeordnet wird, insbesondere so, dass der Mehrwegbehälter durch ein Logistiksystem als ein weiteres Paket bearbeitet wird, ohne dass eine erneute Kennzeichnung des Mehrwegbehälters für weitere Bearbeitungsvorgänge innerhalb des Logistiksystems vorgenommen werden muss.

Die Erfindung sieht vor, dass die Mehrwegbehälter mit individuellen Kennungen versehen werden und dass den Mehrwegbehältern in Abhängigkeit von weiteren Informationen Paketidentifikationscodes zugeordnet werden.

Dies bedeutet beispielsweise, dass einem Mehrwegbehälter mit einer individuellen Kennung bis zu einer ersten Übergabe eines in ihm befindlichen Warenobjektes an einen ersten Empfänger ein erster Paketidentifikationscode zugeordnet wird und dass dem mit der individuellen Kennung versehenen Mehrwegbehälter nach Befüllung mit wenigstens einem weiteren Warenobjekt ein neuer Paketidentifikationscode zugeordnet wird.

Dadurch ist es möglich, Mehrwegbehälter als Pakete einzusetzen, ohne dass eine erneute Kennzeichnung der Mehrwegbehälter für weitere Bearbeitungsvorgänge innerhalb des Logistiksystems vorgenommen werden muss.

Ein Einsatz der Kennung ist bei sämtlichen Ausführungsformen der Erfindung vorteilhaft.

Es gibt zahlreiche Möglichkeiten, den die eindeutige Kennung aufweisenden Mehrwegbehälter mit einem Paketidentifikationscode zu verknüpfen. Erfindungsgemäß ist vorgesehen, dass der mit der Kennung versehene Mehrwegbehälter bis zu einem ersten Übergabevorgang mit einem ersten Paketidentifikationscode versehen wird und dass Bearbeitungsvorgänge des Mehrwegbehälters als Paket zunächst unter Berücksichtigung des ersten Paketidentifikationscodes erfolgen.

Erfindungsgemäß wird die Kennung als Informationen zu einem Paketidentifikationsmerkmal beziehungsweise unmittelbar als Paketidentifikationsmerkmal zu einer Steuerkomponente des Logistiksystems übertragen. Dabei erhält die Steuerkomponente sowohl die Informationen zu den Paketidentifikationsmerkmalen als auch zu den Empfängern der jeweiligen Pakete, insbesondere von einem Bestellsystem.

Nach einer Übergabe des mindestens einen in dem Mehrwegbehälter enthaltenen Warenobjekts wird die zuvor vorgenommene Verknüpfung zwischen dem die Kennung aufweisenden Mehrwegbehälter und dem Paketidentifikationscode aufgehoben, vorzugsweise durch die Steuerkomponente des Logistiksystems.

Durch die Aufhebung der Zuordnung des mit der Kennung versehenen Mehrwegbehälters und dem Paketidentifikationscode wird es ermöglicht, den Mehrwegbehälter mit einem zweiten Paketidentifikationscode zu verknüpfen.

Sobald der Mehrwegbehälter mit einem neuen Paketidentifikationscode verknüpft ist, erfolgen die weiteren Bearbeitungsvorgänge des Mehrwegbehälters als ein neues Paket unter Berücksichtigung des zweiten Paketidentifikationscodes, insbesondere ohne jegliche Berücksichtigung des ersten Paketidentifikationscodes.

Die Erfindung zeichnet sich dadurch aus, dass eine Handhabung des Pakets bis zu dem Übergabevorgang unter Berücksichtigung eines ersten Empfängerattributs erfolgt und dass eine weitere Handhabung des Pakets nach dem ersten Übergabevorgang und/oder nach dem erneuten Beladen des Pakets mit einem weiteren Warenobjekt unter Berücksichtigung eines zweiten Empfängerattributes erfolgt.

In der vorliegenden Anmeldung wird die Formulierung "erster Übergabevorgang" verwendet. Dies bedeutet insbesondere eine Übergabe eines ersten Warenobjektes an einen Empfänger.

Im Anschluss an den ersten Übergabevorgang wird das als Mehrwegbehältnis ausgebildete Paket für Übergabevorgänge weiterer Warenobjekte eingesetzt. Diese Übergabevorgänge werden als weitere Übergabevorgänge bezeichnet.

Die Erfindung sieht vor, dass der erste Übergabevorgang unter Berücksichtigung eines ersten Empfängerattributs erfolgt und dass die weitere Handhabung des Pakets nach dem ersten Übergabevorgang und/oder nach dem Beladen des Pakets mit einem weiteren Warenobjekt unter Berücksichtigung eines zweiten Empfängerattributes erfolgt.

Eine vorteilhafte Ausführungsform der Erfindung sieht vor, dass bei wenigstens einem der Übergabevorgänge ein Entscheidungsvorgang erfolgt, ob ein Paket zu dem Teil der Pakete gehört, bei denen mindestens ein in dem Paket befindliches Warenobjekt einem Empfänger zur Entnahme zur Verfügung gestellt wird, eine Übergabe des Pakets jedoch verhindert wird, so dass das Paket nicht an den Empfänger übergeben wird, oder ob das Paket zu einem weiteren Teil von Paketen gehört, die in dem Übergabevorgang an den jeweiligen Empfänger übergeben werden.

Diejenigen Pakete, die bei einem der Übergabevorgänge einem Empfänger übergeben werden, werden vorzugsweise zusammen mit dem in ihnen befindlichen Warenobjekt übergeben. Dies kann beispielsweise analog zu konventionellen Paketübergaben erfolgen, vorzugsweise so, dass die Pakete ungeöffnet übergeben werden.

Eine zweckmäßige Weiterbildung der Erfindung zeichnet sich dadurch aus, dass der Entscheidungsvorgang, ob ein Paket zu dem Teil der Pakete gehört, bei denen mindestens ein in dem Paket befindliches Warenobjekt einem Empfänger zur Entnahme zur Verfügung gestellt wird, eine Übergabe des Pakets jedoch verhindert wird, so dass das Paket nicht an den Empfänger übergeben wird, oder ob das Paket zu einem weiteren Teil von Paketen gehört, die in dem Übergabevorgang an den jeweiligen Empfänger übergeben werden, in Abhängigkeit von wenigstens einer Eigenschaft des Pakets erfolgt.

Bei dem Entscheidungsvorgang wird vorzugsweise wenigstens eines der folgenden Merkmale des Pakets berücksichtigt:
- Wiederverwendbarkeit des Pakets;
- Geöffnetheit des Pakets, insbesondere Ausgestaltung als ein nach oben offenes Behältnis;
- Möglichkeit zum Öffnen des Pakets;
- Wiederverschließbarkeit des Pakets;
- Kennzeichnung des Pakets.

Eine zweckmäßige Weiterbildung der Erfindung zeichnet sich dadurch aus, dass der Entscheidungsvorgang in Abhängigkeit von einer Anweisung des Versenders und/oder in Abhängigkeit von einer Anweisung des Empfängers des Pakets erfolgt.

Eine vorteilhafte Ausführungsform der Erfindung sieht vor, dass der Entscheidungsvorgang in Abhängigkeit von einer Entrichtung eines etwaigen Entgelts für eine Übergabe des Pakets an den Empfänger erfolgt.

Die verwendete Depoteinrichtung wird vorzugsweise wenigstens innerhalb eines Übergabezeitraums an einem gemeinsamen optimierten Übergabepunkt bereitgestellt. In der vorliegenden Anmeldung wird die Bezeichnung "gemeinsamer optimierter Übergabepunkt" für einen geografisch präzise definierbareren Ort gewählt, der sich besonders gut dafür eignet, dass an ihm mehrere Pakete übergeben werden können. Wegen der Möglichkeit der Übergabe mehrerer Pakete wird dieser Übergabepunkt als ein gemeinsamer Übergabepunkt bezeichnet. Die zusätzliche Charakterisierung als optimierter Übergabepunkt bedeutet, dass der Ort für die Übergabe von Paketen besonders geeignet ist. Insbesondere handelt es sich hierbei um einen Übergabepunkt, der mithilfe eines des in dieser Anmeldung dargestellten Auswahlverfahrens optimiert wurde. Insbesondere sind gemeinsame optimierte Übergabepunkte Orte, die sich für eine Übergabe möglichst vieler Pakete eignen, wobei ein Aufwand für die jeweiligen Empfänger der Pakete möglichst gering ist.

Vorzugsweise wird wenigstens ein Teil der Pakete an den in dieser Anmeldung dargestellten gemeinsamen optimierten Übergabepunkten übergeben. Die in dieser Anmeldung offenbarten vorteilhaften Bearbeitungsvorgänge von Paketen und Bearbeitungssysteme von Paketen sind jedoch nicht auf Ausführungsformen der Bearbeitung von Paketen beschränkt, bei denen Übergabe von Paketen an gemeinsamen optimierten Übergabepunkten erfolgen.

Dabei erfolgt die Auswahl gemeinsamer optimierter Übergabepunkte nicht nur unter Einbeziehung eines Aufwandsparameters für den jeweiligen Empfänger und/oder Einlieferer, sondern auch unter Einbeziehung von Aufwandsparametern für weitere Empfänger und/oder Einlieferer.

### Abbildungsverzeichnis

Weitere Vorteile und bevorzugte Weiterbildungen der Erfindung ergeben sich aus der nachfolgenden Darstellung bevorzugter Ausführungsformen anhand der Abbildungen.
- Figur 1: zeigt einen Ablaufplan des erfindungsgemäßen Verfahrens zur Erläuterung des Ablaufs von unter Einsatz einer Depoteinrichtung stattfindenden Prozessen.
- Figur 2: zeigt eine Ausführungsform einer Bodenplatte einer Haltevorrichtung, wie sie in einer Übergabevorrichtung zum Einsatz kommen kann.
- Figur 3: zeigt eine weitere Ausführungsform einer Bodenplatte einer Haltevorrichtung, wie sie in einer Übergabevorrichtung zum Einsatz kommen kann.
- Figur 4: zeigt eine weitere Ausführungsform einer Bodenplatte einer Haltevorrichtung, wie sie in einer Übergabevorrichtung zum Einsatz kommen kann.
- Figur 5: zeigt eine Prinzipdarstellung eines Logistiksystems.
- Figur 6: zeigt eine Aufsicht auf eine horizontale Querschnittsebene einer Depoteinrichtung mit wenigstens zwei Regalen.
- Figur 7a: zeigt eine vorteilhafte Fachkonfiguration eines Regals;
- Figur 7b: zeigt eine vorteilhafte Fachkonfiguration eines Regals;
- Figur 7c: zeigt eine vorteilhafte Fachkonfiguration eines Regals;
- Figur 7d: zeigt eine vorteilhafte Fachkonfiguration eines Regals;
- Figur 8: zeigt eine perspektivische Darstellung einer Transporteinheit;
- Figur 9: zeigt eine Aufsicht auf eine Transporteinheit;
- Figur 10: zeigt ein Ausführungsbeispiel einer Lagereinheit
- Figur 11: zeigt ein Ausführungsbeispiel einer Lagereinheit
- Figur 12: zeigt in Abbildungen 12a und 12b eine Transporteinheit, die auch als Übergabeeinheit eingesetzt werden kann, und in Abbildungen 12c und 12d eine Prinzipdarstellung einer Übergabe eines Pakets 1698 in einem Bereich einer Übergabeeinrichtung;
- Figur 13: zeigt ein für die Übergabe besonders bevorzugtes Paket aus dem Stand der Technik.

### Erläuterung der Abbildungen

### Einleitung

Die vorliegende Erfindung, ist Teil eines Konzepts, wie eine große Anzahl von Warenobjekten mit möglichst geringem ökologischem Fußabdruck an eine Vielzahl von Empfängern übergeben werden kann.

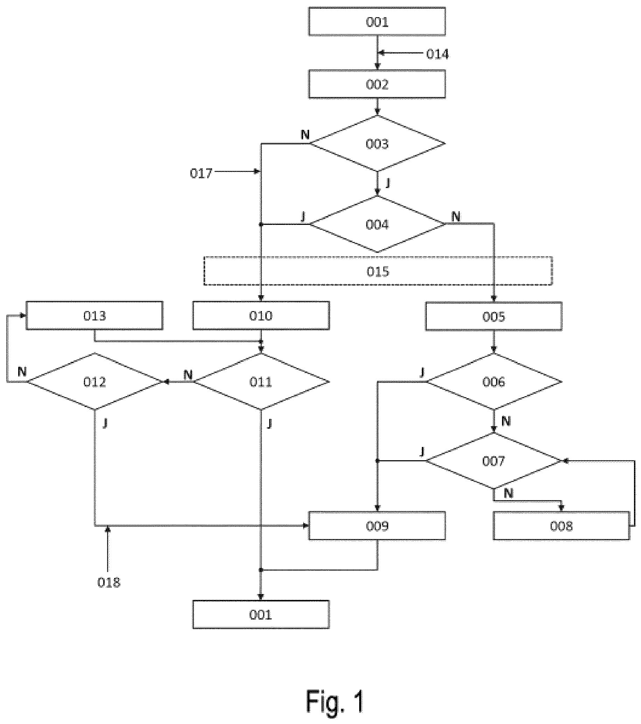

Beschreibung Fig. 1 bis 4:
Figur 1 zeigt eine Erläuterung des Ablaufs der unter Einsatz einer Depoteinrichtung stattfindenden Prozesse. Die hier dargestellte Reihenfolge der Prozessschritte und Abfragen soll dabei nicht einschränkend auf das erfindungsgemäße Verfahren wirken, sondern ist nur eine von vielen denkbaren Ausführungen des Verfahrens. Die Depoteinrichtung befindet sich zu Beginn im Ruhezustand bzw. IDLE-State 001. Ein Empfänger, der sein Warenobjekt und/oder Paket erhalten möchte, stellt beispielsweise über eine APP eine Anfrage 014, die der Depoteinrichtung übermittelt wird. Dadurch wird die Depoteinrichtung veranlasst, anhand eines Paketidentifikationsmerkmals Informationen über das Paket einzuholen. Zu den Informationen gehört, ob es sich bei dem Paket um einen Mehrwegbehälter handelt. Bei positiver Antwort auf diese Abfrage 003 wird in einer nächsten Abfrage 004 geprüft, ob ein Entgelt für die Mitnahme des Mehrwegbehälters bezahlt wurde. Das Entgelt kann sowohl durch den Empfänger z.B. über eine APP als auch durch den Versender geleistet werden. Wurde das Entgelt nicht gezahlt, so wird die Übergabevorrichtung angewiesen, das Paket, das vorzugsweise als Mehrwegbehälter ausgebildet ist, nach Transport 015 in die Übergabevorrichtung bei der Übergabe des Warenobjektes festzuhalten 005 und gegebenenfalls in eine Lagereinrichtung der Depoteinrichtung zu befördern.

Eine Übergabe des Pakets an den Empfänger des Warenobjektes kann in Abhängigkeit von einem oder mehreren Prüfvorgängen erfolgen.

Die Prüfvorgänge beinhalten beispielsweise eine Überprüfung, ob und gegebenenfalls welche Anweisungen des Versenders und/oder des Empfängers in Bezug auf die Übergabe des Pakets selbst vorliegen. Insbesondere kann überprüft werden, ob der Empfänger des Warenobjekts ein Entgelt für die Überlassung nicht nur des Warenobjektes, sondern auch des Pakets entrichtet hat oder bereit ist, ein Entgelt hierfür zu entrichten.

Die Prüfvorgänge können gegebenenfalls zeitlich entkoppelt voneinander stattfinden, wobei eine vorteilhafte Ausführungsform vorsieht, dass ein Prüfvorgang erst während der Bereitstellung des Warenobjektes zur Entnahme erfolgt. Ein Prüfvorgang, der während der Bereitstellung des Warenobjektes zur Entnahme erfolgt, ist beispielsweise, ob der Empfänger des Warenobjektes während der Bereitstellung des Warenobjektes ein Entgelt für die Überlassung des Pakets entrichtet oder eine Information übermittelt, dass er zur Entrichtung des Entgelts bereit ist.

Eine Ausführungsform sieht vor, dass der Empfänger auch nach Sicht des Warenobjekts, das Entgelt nachträglich leisten kann und dass das Paket dann nicht mehr festgehalten wird. Es ist möglich, dass der Deckel des als Mehrwegbehälter ausgebildeten Pakets bereits von der Depoteinrichtung entfernt wurde und dem Empfänger in der Übergabevorrichtung das Warenobjekt in dem Paket bereitgestellt wird. Ebenso ist es denkbar, dass der Deckel des Mehrwegbehälters als eine Art Einwegdeckel ausgebildet ist und dass der Empfänger diesen Deckel nun in der Übergabevorrichtung abzieht, um Zugang zu seinem Warenobjekt zu erhalten. Während der Warenpräsentation kann dem Empfänger die Möglichkeit geboten werden, den beschädigungsfreien Zustand seines Warenobjekts festzustellen und ihm die Option bspw. via APP anzubieten, das Paket an Ort und Stelle Retour zu schicken (Abfrage 006). Solange die Retour-Option nicht gewählt wird oder im Fall, dass diese Option nicht implementiert ist, wartet die Depoteinrichtung, bis das Warenobjekt entnommen wurde 008. Es kann vorteilhaft sein, dass der Empfänger via APP gefragt wird, ob er damit einverstanden ist, dass das Paket nun in der Depoteinrichtung eingelagert wird (Abfrage 007). Reagiert der Empfänger nach Entnahme des Warenobjekts innerhalb einer vordefinierten Zeitspanne nicht oder gibt per APP sein Einverständnis, dass das Paket nun eingelagert werden kann, nimmt die Depoteinrichtung das Paket zurück und lagert es ein 009. Anschließend kehrt die Depoteinrichtung zurück in ihren Ausgangszustand, den IDLE-State 001.

Für den Fall, dass es sich bei dem Paket nicht um einen Mehrwegbehälter, sondern um eine Kartonage oder eine andere für einen einmaligen Gebrauch gedachte Umverpackung handelt, wird das Paket bei der Übergabe nicht festgehalten 010. Es kann vorteilhaft sein, dem Empfänger bereits vor dem Übergabevorgang bspw. via APP die Frage zu stellen, ob er seine Umverpackung mitnehmen möchte, oder ob sie kostenpflichtig gegen ein Entgelt von bspw. 30 ct. umweltfreundlich entsorgt werden soll. Es wird entweder in regelmäßigen Zeitabständen geprüft, ob das Paket oder die Ware entnommen wurde (Abfrage 011), oder nach einem definierten Zeitfenster (z.B. 15 Sek) automatisch davon ausgegangen, dass das Paket oder das Warenobjekt entnommen wurde. Bei Entnahme des Pakets kehrt die Depoteinrichtung zurück in ihren Ausgangszustand 001 und wartet auf eine Anweisung. Für den Fall, dass ein Empfänger seine Umverpackung in der Übergabevorrichtung zurücklässt, obwohl er die Option vorab nicht ausgewählt hat und die Umverpackung nicht für einen weiteren Gebrauch gedacht ist, wird der Empfänger per APP gefragt, ob die Entsorgung der Umverpackung kostenpflichtig, beispielsweise für 30ct., erfolgen soll (Abfrage 012), oder ob er sie mitnehmen möchte. Verneint der Empfänger diese Abfrage, so wird eine Zeitspanne gewartet 013, innerhalb der er das Paket entnehmen kann. Versäumt der Empfänger es dann, sein Paket innerhalb der Zeitspanne zu entnehmen, werden ihm die 30ct. in Rechnung gestellt und das Paket eingelagert 018 und die Depoteinrichtung kehrt in den Ausgangszustand 001 zurück.

Es ist besonders bevorzugt, dass der Anteil der Pakete, die Mehrwegbehälter sind, besonders hoch ist. Durch das Festhalten beziehungsweise Bepfanden der Mehrwegbehälter wird erreicht, dass der Kreislauf der Mehrwegbehälter von Versendern zu Empfängern und zurück geschlossen wird und der Anteil der rücklaufenden Mehrwegbehälter, die für weitere Übergabevorgänge genutzt werden, möglichst hoch ist (z.B. > 90%), sodass ein kosteneffizienter und ökologisch sinnvoller Kreislauf etabliert wird.

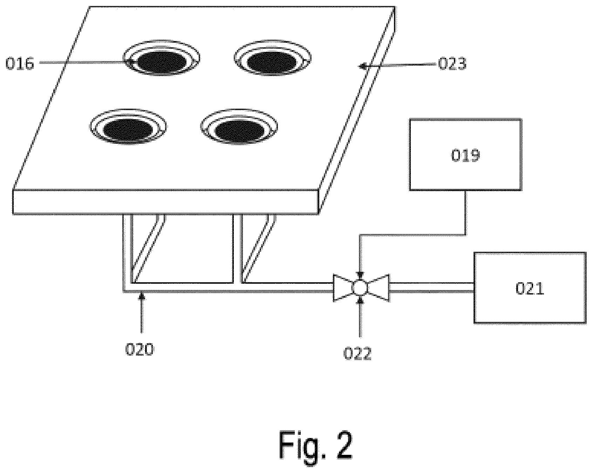

Figuren 2 bis 4 zeigen Haltevorrichtungen, wie sie in der Übergabevorrichtung zum Einsatz kommen können. Dabei zeigt Figur 2, eine Bodenplatte 023 der Übergabevorrichtung, auf die ein Paket mithilfe der Transporteinheit der Depoteinrichtung gelegt wird. Die Bodenplatte 023 weist Löcher 016 auf, in die beispielsweise Faltenbalgsauggreifer oder hier gezeigte Flachsauggreifer eingelassen sind. Bei Öffnung eines zu einer Vakuumpumpe 021 führenden Ventils 022 durch eine Steuereinheit 019 der Depoteinrichtung nutzen die Sauggreifer den Unterdruck, um sich in festen Kontakt mit dem Boden eines über ihnen befindlichen Pakets zu bringen. Zur Lösung dieser Sauggreifer können sie beispielsweise mit Überdruck beaufschlagt werden, sodass kein Schaden am Mehrwegbehälter entsteht, wenn er von den Sauggreifern gelöst werden soll. Die hier gezeigte Verbindung der Leitungen 020 ist nur eine mögliche Form der Ausgestaltung dieser Haltevorrichtung. Es ist ebenso denkbar, eine alternative Verbindung der Sauggreifer zu der Vakuumpumpe 021, beispielsweise eine Parallelschaltung, herzustellen.

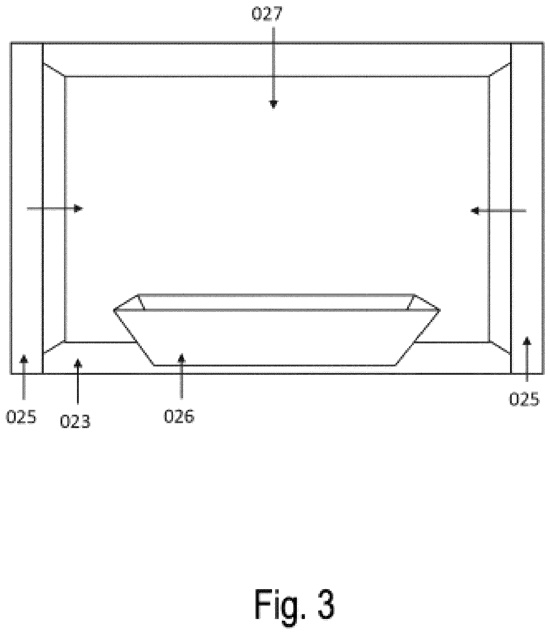

Figur 3 zeigt beispielhaft eine alternative Haltevorrichtung, bei der eine Verjüngung in der dem Empfänger zugewandten Öffnung der Übergabevorrichtung 027 ein Herausnehmen des Pakets 026 verhindert, indem zwei als Türen agierende Wände 025 entsprechend der Größe des Pakets zugeschoben werden. Dabei wird die verbleibende Öffnung so gewählt, dass der Empfänger zwar sein Warenobjekt entnehmen kann, nicht jedoch das Paket 026 selbst. Diese Art der Haltevorrichtung ist gerade für den Teil der Pakete 026, die als Mehrwegbehälter ausgebildet sind und eine bestimmte Mindestgröße nicht unterschreiten, aufgrund ihrer Einfachheit besonders sinnvoll.

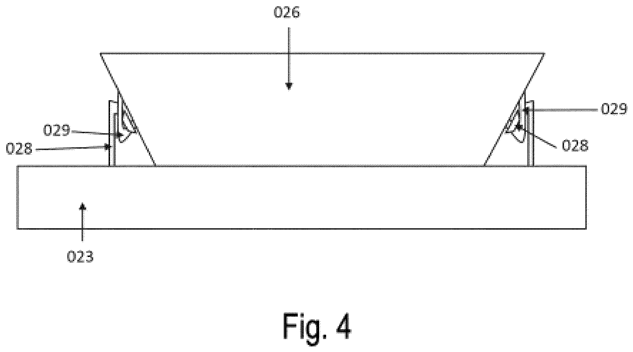

Eine weitere in Figur 4 gezeigte Haltevorrichtung nutzt an den Paketen 026 möglicherweise vorgesehene Laschen 029, in die mittels beispielsweise in der Bodenplatte 023 verbauten Haken 028 eingegriffen werden kann. Die Haken 028 sind im liegenden Zustand in der Bodenplatte 023 eingelassen und werden bei Aktivierung der Halteeinrichtung an entsprechender Position, in Abhängigkeit der Größe des Pakets in die Laschen 029 eingebracht. So ist ein Entnehmen des Pakets 026 verhindert, nicht jedoch des darin befindlichen Wareninhalts. Die Haken 028 sind bei dieser Haltevorrichtung nicht zwangsweise in der Bodenplatte 023 untergebracht, sondern können in anderen hier nicht gezeigten Bereichen der Übergabevorrichtung 027 angebracht werden.

### Gesamtüberblick Logistiksystem und Logistikprozesse Paketidentifikationsmerkmal

In der vorliegenden Anmeldung können gleiche, insbesondere gleichbleibende Paketidentifikationsmerkmale und/oder sich von anderen Paketidentifikationsmerkmalen unterscheidende Paketidentifikationsmerkmale zur Identifikation eines Pakets eingesetzt werden.

Sofern Pakete in der vorliegenden Anmeldung nicht ausdrücklich als Datenpakete oder virtuelle Pakete bezeichnet werden, sind Pakete im Sinne der vorliegenden Erfindung stets physische Gegenstände, insbesondere mit gleichbleibenden physischen Eigenschaften, insbesondere Gewicht und Abmessungen. Es ist somit möglich, während des Aufenthalts des Pakets in einem erfindungsgemäßen Logistiksystem sicherzustellen, dass es sich jeweils um ein bestimmtes Paket handelt. Verschiedene Pakete unterscheiden sich im Regelfall in wenigstens einer physischen Eigenschaft und können durch Messung dieser physischen Eigenschaft voneinander unterscheiden werden. Diese physischen Eigenschaften sind daher als Paketidentifikationsmerkmale bei einer vorteilhaften Weiterbildung der Erfindung einsetzbar.

Bei dem Paketidentifikationsmerkmal kann es sich beispielsweise auch um einen Paketidentifikationscode handeln, der ein Paket eindeutig identifiziert. Ein derartiger Paketidentifikationscode wird beispielsweise auf ein Paket aufgebracht, bevor es an ein Logistiksystem oder eine Einheit des Logistiksystems, beispielsweise eine der in dieser Anmeldung dargestellten Annahmeeinheiten, beispielsweise die dargestellten Depoteinrichtungen übergeben wird, oder der Paketidentifikationscode wird bei einer Einlieferung in das Logistiksystem oder einem der Bearbeitungsvorgänge innerhalb des Logistiksystems auf das Paket aufgebracht.

Von der Erfindung mit umfasst sind Ausführungsformen, bei denen wenigstens einzelne Pakete, beziehungsweise möglichst viele Pakete als Mehrwegbehälter ausgebildet sind. Erfindungsgemäß sind alle Mehrwegbehälter mit einer individuellen, dauerhaft identischen Kennung versehen, wobei den Mehrwegbehältern in Abhängigkeit von weiteren Informationen Paketidentifikationscodes zugeordnet werden.

Von der Erfindung mit umfasst sind Ausführungsformen, bei denen der Paketidentifikationscode ein physischer Code ist, der beispielsweise auf das Paket, eine Umverpackung des Pakets oder auf eine Lagereinheit für das Paket und/oder eine Transporteinheit für das Paket aufgebracht ist und/oder Ausführungsformen, bei denen der Paketidentifikationscode ein digitaler Code ist, welcher dem Paket und/oder einem digitalen Zwilling des Pakets zugeordnet wird.

Bei Ausgestaltung einzelner, mehrerer, vieler oder gegebenenfalls sogar aller Pakete als mit individuellen Kennungen gekennzeichnete Mehrwegbehälter sind digitale Codes als Paketidentifikationscodes einsetzbar.

Der Einsatz von digitalen Codes als Paketidentifikationscodes ist bei allen Ausführungsformen der Erfindung vorteilhaft, wobei der Einsatz der digitalen Codes in Zusammenhang mit digitalen Zwillingen besonders vorteilhaft ist.

Es ist vorteilhaft, wenn der jeweilige digitale Zwilling eines der Pakete, vorzugsweise mehrerer Pakete, noch vorteilhafter möglichst vieler Pakete mindestens ein Paketidentifikationsmerkmal enthält. Bei vorteilhaften Ausführungsformen, bei denen das Paket mit einem Paketidentifikationscode verknüpft ist, ist es vorteilhaft, dass der digitale Zwilling des Pakets den Paketidentifikationscode enthält.

Es ist zweckmäßig, wenigstens eine, vorteilhafterweise mehrere, noch vorteilhafter möglichst viele Informationen in den digitalen Zwilling eines Pakets zu integrieren.

Es ist besonders vorteilhaft, Paketidentifikationsmerkmale einzusetzen, die besonders leicht ermittelt werden können. Dies ermöglicht es, die Identität eines Pakets schneller und/oder mit geringerem Aufwand festzustellen.

Eine bevorzugte Ausgestaltung einer erfindungsgemäßen Handhabung von Paketen sieht vor, einen Paketidentifikationscode zu vergeben und/oder zu erfassen und anschließend als primäres Paketidentifikationsmerkmal zu speichern. Zweckmäßigerweise wird wenigstens ein weiteres, leichter und/oder schneller identifizierbares Merkmal des Pakets als sekundäres Paketidentifikationsmerkmal, insbesondere zur Kontrolle einer Richtigkeit des primären Paketidentifikationsmerkmals und/oder zur Steuerung eines weiteren Bearbeitungsvorganges eingesetzt. Beispiele für schneller und/oder mit geringerem Aufwand feststellbare Paketidentifikationsmerkmale sind Gewicht und/oder Abmessungen eines Pakets.

Sowohl das primäre Paketidentifikationsmerkmal als auch das sekundäre Paketidentifikationsmerkmal können Paketidentifikationsmerkmale im Sinne der vorliegenden Erfindung sein, wobei es besonders vorteilhat ist, Bearbeitungsvorgänge, insbesondere Bearbeitungsvorgänge von Paketen anhand eines dieser Paketidentifikationsmerkmale durchzuführen.

Ein nachfolgender Bearbeitungsvorgang des Pakets kann dann anhand einer Ermittlung des anderen Paketidentifikationsmerkmals durchgeführt werden. Hierzu ist es beispielsweise vorteilhaft, Förderbänder von Transfereinrichtungen mit Kameras zur Erfassung von Abmessungen der Pakete und/oder mit einer Waage auszustatten und/oder Transporteinheiten mit einer Waage auszustatten.

Beispielsweise wird ermittelt, dass ein Paket mit einem primären Paketidentifikationsmerkmal in Form eines Paketidentifikationscodes 123456789 ein Gewicht von 5015,6 g hat. Nachfolgend kann ein gemessenes Gewicht von 5015,6 g +/- 0,2 g als sekundäres Paketidentifikationsmerkmal eingesetzt werden. Die Messung des Gewichtes stellt somit beispielhaft eine Ermittlung eines leichter und/oder schneller identifizierbaren sekundären Paketidentifikationsmerkmals dar, welche eine Richtigkeit, dass dies das Paket mit dem Paketidentifikationscode 123456789 ist, kontrolliert und/oder anstelle des Paketidentifikationscodes zur weiteren Bearbeitung eingesetzt werden kann. Mit Kontrolle der Richtigkeit und einer Verknüpfung mit einem digitalen Abbild des Pakets, insbesondere seines digitalen Zwillings, ist das Paket zuverlässig identifiziert.

Das Paket mit dem Paketidentifikationscode 123456789 kann bereits bei einer Einlieferung in das Logistiksystem einem Empfänger und/oder einem Übergabepunkt, insbesondere einem gemeinsamen optimierten Übergabepunkt für die Übergabe mehrerer Pakete an mehrere Empfänger und/oder von mehreren Einlieferern zugeordnet sein. Es ist jedoch gleichfalls vorteilhaft, für wenigstens eines der Pakete die Zuordnung zu dem Empfänger und/oder dem Übergabepunkt zwischen der Einlieferung und der Übergabe an einen Empfänger des Pakets zu ändern.

Dieses allgemeine Prinzip kann erfindungsgemäß bei verschiedenen Bearbeitungsvorgängen umgesetzt werden, beispielsweise innerhalb eines der erfindungsgemäßen Verteilzentren, insbesondere eines Sortierzentrums und/oder auch zur Einlagerung von Paketen in erfindungsgemäße Depoteinrichtungen. Beispielsweise kann zunächst der Paketidentifikationscode eines Pakets ermittelt werden und dann erfolgen ein oder mehrere Bearbeitungsvorgänge. Bei einzelnen, mehreren oder allen Bearbeitungsvorgängen ist eine Berücksichtigung eines Paketidentifikationsmerkmales vorteilhaft.

So ist es beispielsweise möglich, zunächst einen Paketidentifikationscode eines Pakets zu ermitteln und das Paket hierdurch zuverlässig zu identifizieren. Vorzugsweise wird der Paketidentifikationscode als ein Paketidentifikationsmerkmal mit wenigstens einem anderen Paketidentifikationsmerkmal, beispielsweise einem Gewicht und/oder einer Abmessung des Pakets verknüpft. Auch eine Abbildung des Pakets kann als Paketidentifikationsmerkmal eingesetzt werden. Dies ist insbesondere dann vorteilhaft, wenn Warenobjekte als Pakete bearbeitet werden.

Eine vorteilhafte Weiterbildung der Erfindung sieht vor, dass den Paketen maschinenlesbare Daten zugeordnet werden, wobei die Daten zumindest eine Kennung umfassen, mit der das jeweilige Paket identifizierbar, insbesondere eindeutig identifizierbar ist. Zweckmäßigerweise wird wenigstens eines der in dieser Anmeldung dargestellten Paketidentifikationsmerkmale als Kennung für das jeweilige Paket eingesetzt.

Es ist besonders vorteilhaft, einen Paketidentifikationscode festzulegen, beispielsweise digital und/oder durch Versehen eines Pakets mit einem den Paketidentifikationscode enthaltenden Barcode oder Matrixcode oder einem den Paketidentifikationscode enthaltenden RFID-Chip oder einen bereits festgelegten Paketidentifikationscode zu ermitteln, beispielsweise mittels eines 6-Seiten-Scanners oder eines RFID-Lesers.

Nach der Festlegung und/oder Ermittlung des Paketidentifikationscodes kann - beispielsweise unter Einbeziehung eines digitalen Zwillings für das Paket - ein gesteuerter und/oder gemessener Transportweg und/oder Sortierweg des Pakets geplant und/oder nachverfolgt werden, so dass ein nachfolgender Bearbeitungsvorgang des Pakets, insbesondere eine Sortierung des Pakets und/oder ein Transport des Pakets anhand einer Kombination des zuvor festgestellten Paketidentifikationscodes mit einer Ermittlung eines anderen, vorzugsweise leichter und/oder schneller messbaren Paketidentifikationsmerkmals so präzise durchgeführt werden, wie dies bei einer Ermittlung des Paketidentifikationscodes selbst der Fall ist. Hierdurch wird auch bei einer schnelleren und/oder weniger aufwändigen Ermittlung eines Paketidentifikationsmerkmals das Paket zuverlässig identifiziert.

Dabei ist es möglich, Bearbeitungsvorgänge durch eine Bereitstellung von Prozessprotokollen, vorteilhafterweise unter Einbeziehung individueller Prozessprotokolle für einzelne Pakete zu ergänzen und/oder die bereitgestellten Prozessprotokolle für eine Steuerung von Bearbeitungsvorgängen einzusetzen. Ein Einsatz individueller Prozessprotokolle für einzelne Pakete hat den Vorteil, dass Echtzeitanwendungen implementiert werden können und/oder dass eine Verknüpfung zwischen einzelnen Paketen und ihren jeweiligen digitalen Zwillingen erleichtert wird.

Eine Implementation der Zuordnung von Paketen zu Versendern und/oder Empfängern erfolgt beispielsweise durch die in dieser Anmeldung dargestellten Verknüpfungen und/oder gleichfalls dargestellten Bereitstellungen von Prozessprotokollen, vorteilhafterweise unter Einbeziehung individueller Prozessprotokolle für einzelne Pakete, so dass insbesondere eine Verknüpfung zwischen einzelnen Paketen und ihren jeweiligen digitalen Zwillingen erleichtert wird.

Die Informationen zu dem Paketidentifikationsmerkmal werden zu einer Steuerkomponente 5012 übertragen. Im dargestellten Fall erhält die Steuerkomponente 5012 sowohl die Informationen zu den Paketidentifikationsmerkmalen als auch zu den Empfängern der jeweiligen Pakete von dem Bestellsystem 5010.

### Abbildung 5

### Einleitung

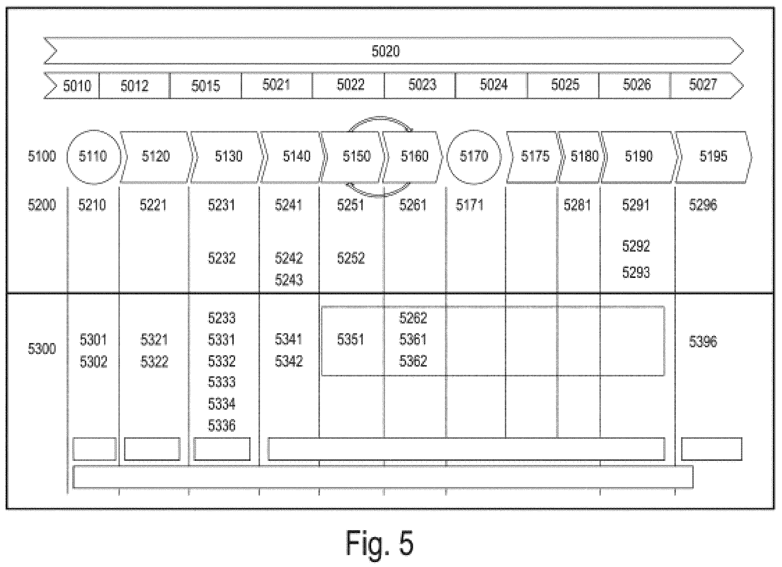

In Abbildung 5 ist ein Logistiksystem 5020 mit zugeordnetem Bestellsystem 5010 dargestellt.

Ein Betreiber eines erfindungsgemäßen Logistiksystems kann sowohl Anbieter eines Bestellsystems, insbesondere Händler, als auch eines Logistiksystems sein. Umgekehrt kann ein Händler neben seinem Bestellsystem auch Logistikdienstleistungen anbieten.

Die in dieser Anmeldung dargestellte Erfindung lässt sich in eProcurement-Anwendungen und eCommerce-Anwendungen integrieren.

Zentrale Aufgabe eines Betreibers eines Logistiksystems ist die Übergabe des richtigen Pakets an den richtigen, berechtigten Empfänger. Zur Erfüllung dieser Aufgabe ist die Sicherstellung der eindeutigen Identifizierung eines Paketes und des zugehörigen eindeutigen Empfängers erforderlich.

Jedes Paket/ jedes Warenobjekt weist vorzugsweise einen zuverlässigen Identifizierer als Paketidentifikationsmerkmal auf, im Fall eines Warenobjektes beispielsweise einen EAN-Code, im Falle eines Buches eine ISBN-Nummer, im Fall eines umverpackten Paketes eine Paketidentifikationsnummer.

Zur korrekten Identifizierung des Empfängers werden neben Namen und Hausanschrift bevorzugt eindeutige Merkmale wie E-Mail-Adresse oder Mobilfunknummer angewandt.

Beispielsweise beinhaltet das in Abbildung 5 dargestellte Logistiksystem 5020 in der mit 5100 gekennzeichneten Zeile Bearbeitungsvorgänge von Paketen; in den 5200 gekennzeichneten Zeilen zweckmäßige Bearbeitungseinheiten zu der Handhabung der Pakete und in den mit 5300 gekennzeichneten Zeilen bevorzugte Ausführungsformen der in den Zeilen 5200 dargestellten Bearbeitungseinheiten.

Die Bearbeitungsvorgänge und die eingesetzten Bearbeitungseinheiten sind miteinander kombinierbar, wobei möglichst umfassende Kombinationen besonders vorteilhaft sind.

Bei einer Kombination einzelner Bearbeitungsvorgänge und Bearbeitungseinheiten ist es insbesondere zweckmäßig, dargestellte Bearbeitungseinheiten nur dort vorzusehen und einzusetzen, wo dies für die weitere Bearbeitung der Pakete vorteilhaft ist. Sofern beispielsweise die Pakete bereits vereinzelt übergeben werden, sind Maßnahmen zur Vereinzelung der Pakete nicht erforderlich. Ebenso kann eine Erfassung von Paketidentifikationsmerkmalen entfallen, wenn eine Identität des Pakets bereits aus einem oder mehreren der vorangegangenen Bearbeitungsvorgänge des Pakets bekannt ist.

Wenn beispielsweise ein Paketidentifikationscode eines Pakets bereits ermittelt wurde, ist es nicht erforderlich, den Paketidentifikationscode ein weiteres Mal zu ermitteln, sondern es ist stattdessen gleichfalls möglich und in vielen Ausführungsformen vorteilhafter, eine nachfolgende Identifikation des Pakets anhand eines schneller und/oder mit geringerem Aufwand ermittelbaren anderen Paketidentifikationsmerkmals durchzuführen.

Ein nachfolgender Bearbeitungsvorgang des Pakets kann dann anhand der Ermittlung des anderen Paketidentifikationsmerkmals durchgeführt werden.

Zusätzlich zu den üblichen im Umfeld eines Betreibers eines Logistiksystems eingesetzten Komponenten ist es vorteilhaft, einzelne, mehrere, möglichst viele oder besonders bevorzugt sogar sämtliche der in den Zeilen 5300 aufgeführten, weiteren Komponenten einzusetzen.

### Bestellsystem 5010

Als Bestellsystem 5010 wird insbesondere ein System zur Beauftragung von Einlieferungen und/oder Abholungen von Paketen verstanden.

Bei dem Bestellsystem handelt es sich beispielsweise um ein Computernetzwerk mit Verknüpfungsschnittstellen zur Interaktion mit einer Vielzahl von Benutzern.

Das Bestellsystem ist ein System mit Mitteln zur elektronischen Beschaffung von Gütern unter Nutzung eines Netzwerkes, beispielsweise des Internets sowie anderer Informations- und Kommunikationssysteme. Es kann sich sowohl um Systeme eines Einkaufs von Unternehmen oder Organisationen als auch von Privatleuten handeln.

Vorzugsweise werden für Bestellaufträge gesicherte Zugänge in Extranets oder Intranets genutzt, insbesondere VPNs (virtual private network), die besonders abgesichert und für Dritte nicht zugänglich sind.

### Logistiksystem 5020

Das in Verbindung mit dem erfindungsgemäßen Verfahren eingesetzte Logistiksystem betrifft vorteilhafterweise sowohl die "Vorwärtslogistik" (vom Versandhandel oder Privatversender zum Empfänger) als auch die "Rückwärtslogistik" (vom Empfänger oder Privatversender zurück zum Versandhandel oder einem anderen Empfänger).

Das Logistiksystem 5020 ist beispielsweise so ausgebildet, dass es mit einem oder mehreren Bestellsystemen 5010 zusammenwirken kann. Es kann sich hierbei um Verknüpfungen handeln, bei denen das Bestellsystem in das Logistiksystem eingebettet ist, aber auch um Verknüpfungen, bei denen das Logistiksystem 5020 von dem Bestellsystem 5010 Handhabungsaufträge für die Pakete erhält.

Eine bevorzugte Variante ist, dass das Bestellsystem 5010 und das Logistiksystem 5020 in Echtzeit miteinander verknüpft sind.

Insbesondere in diesem Fall sieht das Bestellsystems 5010 vor, dass das Bestellsystem ein Eingabemittel zur Eingabe von einem oder mehreren gewünschten Übergabepunkten für die Übergabe eines Paketes an einen Empfänger dieses Paketes aufweist. Mittels dieser Informationen sowie der benötigten Informationen zur Identifizierung von Paket und Empfänger ist eine Steuerung des Paketes an den berechtigten Empfänger durch das Logistiksystem 5020 sichergestellt.

Es ist auch möglich, das dargestellte Logistiksystem 5020 unabhängig von einem Bestellsystem 5010 zu betreiben. Die Informationen zu dem Paketidentifikationsmerkmal werden dann von einem separaten Bestellsystem - das eines Dritten - zum Logistiksystem 5020 übertragen. Im dargestellten Fall erhält das Logistiksystem 5020 sowohl die Informationen zu den Paketidentifikationsmerkmalen als auch ein eindeutiges Identifizierungsmerkmal zu den Empfängern der jeweiligen Pakete - beispielsweise eine E-Mail-Adresse oder Mobilfunk-Nummer.

### Verknüpfungsschnittstelle 5015

Wie dargestellt, funktioniert das erfindungsgemäße Verfahren mit mehreren Bestellsystemen und/oder Bestellkomponenten, so dass das dargestellte Bestellsystem 5010 lediglich ein Beispiel ist.

In einer ersten vorteilhaften Ausführungsform der Erfindung werden zunächst ein an sich bekanntes Logistiksystem 5020 und ein an sich bekanntes Bestellsystem 5010 durch die Verknüpfungsschnittstelle 5015 miteinander verknüpft.

Realisiert wird die Verknüpfung durch mindestens eine Verknüpfungsschnittstelle 5015.

Die Verknüpfungsschnittstelle 5015 ist beispielsweise so ausgebildet, dass Anweisungen zur Handhabung der Pakete und/oder zur Zuordnung der Pakete an Empfänger übermittelt werden können.

Vorteilhaft wird die Verknüpfungsschnittstelle 5015 so weitergebildet, dass Zuordnungen von Paketen zu Übergabepunkten und/oder Empfängern verändert werden können.

Durch den Einsatz der Verknüpfungsschnittstelle 5015 ist es möglich, ein Paket auch bei Weglassen von Versenderidentifikationsmerkmalen und/oder Empfängeridentifikationsmerkmalen einem Versender und/oder einem Empfänger zuzuordnen.

### Steuerkomponente 5012 des Logistiksystems

Die Steuerkomponente 5012 des Logistiksystems 5020 kann so ausgestaltet sein, dass sie möglichst viele oder sogar sämtliche der Bearbeitungsvorgänge der Pakete steuert. Es ist jedoch gleichfalls möglich, dass die Steuerkomponente 5012 lediglich einzelne der in dieser Anmeldung dargestellten Verfahrensschritte steuert.

Nachfolgend sind Einzelheiten zu bevorzugten Ausgestaltungen der Steuerkomponente zur Durchführung des erfindungsgemäßen Verfahrens dargestellt.

Wie zuvor bereits dargestellt, kann die Steuerkomponente 5012 des Logistiksystems 5020 so ausgestaltet sein, dass die Steuerkomponente 5012 möglichst viele oder sogar sämtliche der Bearbeitungsvorgänge der Pakete steuert. Es ist jedoch gleichfalls möglich, dass die Steuerkomponente 5012 lediglich einzelne der in dieser Anmeldung dargestellten Verfahrensschritte steuert. Dabei werden aus möglichst vielen, gegebenenfalls sogar sämtlicher der nachfolgenden dargestellten Komponenten gewonnene Informationen eingesetzt:
- 5022: Benutzer-APP zur Erfassung und Verwaltung von Benutzerdaten sowie Kommunikationsschnittstelle und Bedienelement einer Depoteinrichtung
- 5023: Benutzerdatenbank der Benutzer-APP
- 5024: Netzkonfigurationsmodul insbesondere mit einer Datenbank für potentielle Aufstellorte mobiler Depoteinrichtungen;
- 5025: Netzkonfigurations-Tool für mobile Depoteinrichtungen;
- 5026: Steuerungsmodul Transport mobile Depoteinrichtungen;
- 5027: Benachrichtigungskomponente;
- Ortsbestimmungsinformationen zur Ermittlung der Orte und/oder Lagerpositionen der Pakete.

Die nachfolgenden Ausführungen beziehen sich sowohl auf die zuvor anhand von Abbildung 5 dargestellte Steuerkomponente 5012 als auch auf weitere Steuerkomponenten, die von der dort dargestellten Steuerkomponente 5012 gegebenenfalls getrennt sind. Die nachfolgend dargestellten Steuerkomponenten können jedoch auch unabhängig von der Steuerkomponente 5012 betrieben werden und sind nicht auf eine Steuerung durch die anhand Abbildung 5 dargestellte Steuerkomponente 5012 angewiesen.

Während Pakete im Stand der Technik aufwändig mit separat zu erstellenden Labeln versehen werden müssen, ist es mit der Erfindung möglich, beliebige physische Gegenstände - sofern für die jeweiligen Bearbeitungsvorgänge zu berücksichtigende Abmessungen und/oder Gewichte eingehalten werden - handzuhaben, insbesondere durch einen oder mehrere der folgenden Bearbeitungsvorgänge:
- Einlieferung;
- Kommissionierung;
- Sortierung;
- Transport;
- Übergabe.

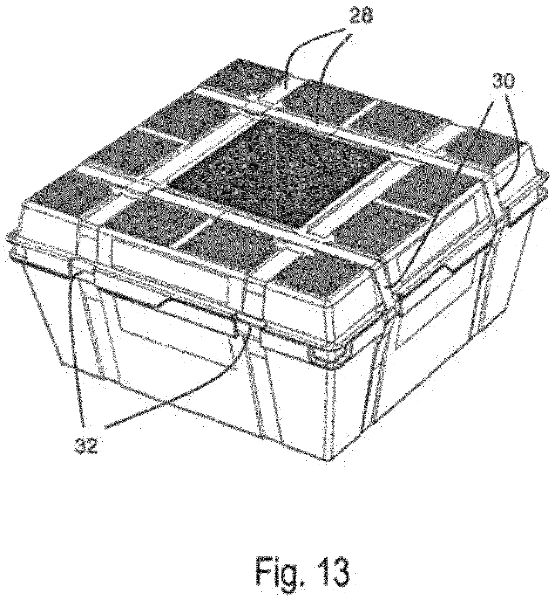

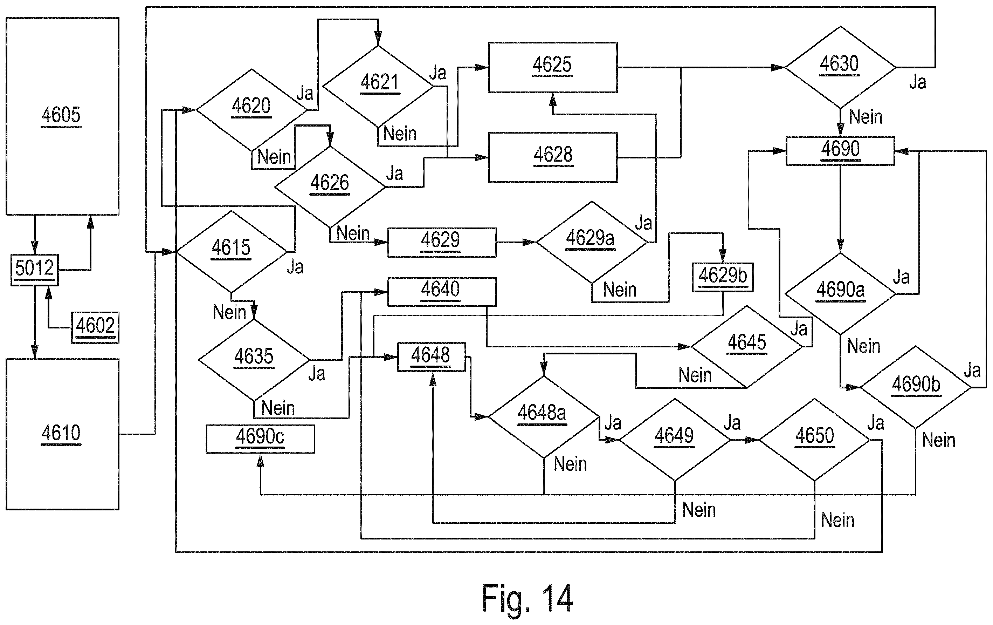

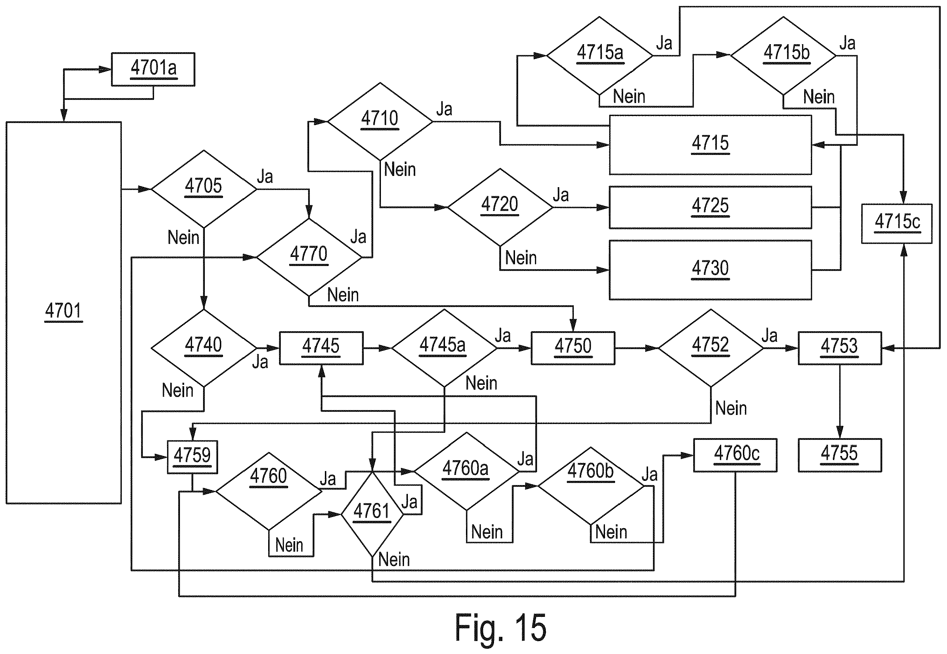

Pakete nach dem Stand der Technik und Warenobjekte nach dem Stand der Technik - wie das beispielhaft in Abbildung 13 dargestellte Paket - können gleichfalls unter Einbeziehung der dargestellten Bearbeitungsvorgänge als erfindungsgemäße Pakete gehandhabt werden.

Weiterhin ist es möglich, dass den Paketen weitere Informationen als maschinenlesbare Daten, insbesondere durch Einsatz von digitalen Zwillingen, zugeordnet werden. Ein Beispiel für die weiteren Informationen sind Abmessungen, insbesondere das Raummaß des Pakets und/oder das Gewicht des Pakets, Fälligkeitsdatum/Zeit, Strafen für verspätete Lieferung, Lieferkosten, Einlieferer- und Empfängerinformationen, Material, Zerbrechlichkeit und Parameter des erforderlichen Transports des Pakets, z.B. ein Kühllastwagen für Güter, die gekühlt werden müssen.

Es ist zweckmäßig, den Steuerkomponenten eine Protokollfunktionalität hinzuzufügen.

### Benutzer-APP 5021, 5022

Die Bezugsziffern 5021, 5022 bezeichnen insbesondere eine Benutzer-APP zur Erfassung und Verwaltung von Benutzerdaten sowie Kommunikationsschnittstelle und Bedienelement einer Depoteinrichtung.

### Benutzerdatenbank 5023 der Benutzer-APP

Die Benutzerdatenbank 5023 dient als Backend-System der Benutzer-APP.

### Netzkonfigurationsmodul 5024 und Netzkonfigurations-Tool 5025

Die Bezugsziffer 5024 bezeichnet insbesondere ein Netzkonfigurationsmodul, vorzugsweise mit einer Datenbank für potentielle Aufstellorte mobiler Depoteinrichtungen.

### Steuerungsmodul Transport mobiler Depoteinrichtungen 5026

Das Steuerungsmodul 5026 steuert den Transport der mobilen Depoteinrichtungen.

### Benachrichtigungskomponente 5027

Benachrichtigungskomponenten 5027 können wie bei bestehenden Logistiksystemen eingesetzt werden.

### Bearbeitungsvorgänge von Paketen 5100

In dem Logistiksystem 5020 folgen die in Zeile 5100 dargestellten Bearbeitungsvorgänge aufeinander. Es ist besonders vorteilhaft, mehrere, insbesondere viele der in Zeile 5100 dargestellten Bearbeitungsvorgänge durchzuführen, jedoch ist es nicht notwendig, sämtliche der in Zeile 5100 dargestellten Bearbeitungsvorgänge durchzuführen.

Die Handhabung von Paketen beinhaltet einen, mehrere oder sämtliche der nachfolgenden Bearbeitungsvorgänge eines Pakets:
- Annahme des Pakets, beispielsweise durch Einlieferung, insbesondere durch eine Depoteinrichtung 830, 5242, 5243, 5321, 5322;
- Transport des Pakets zwischen der Depoteinrichtung 830, 5242, 5243, 5321, 5322 und einem Einlieferer und/oder einem Empfänger des Pakets, insbesondere durch eine Übergabeeinheit,
- Transport des Pakets innerhalb der Depoteinrichtung, insbesondere zwischen einer Übergabeeinrichtung und Lagerpositionen einer Lagereinrichtung der Depoteinrichtung;
- Transport des Pakets von einer Depoteinrichtung 830, 5242, 5243, 5321, 5322 zu einer weiteren Depoteinrichtung 830, 5242, 5243, 5321, 5322;
- Transport des Pakets zwischen der Depoteinrichtung 830, 5242, 5243, 5321, 5322 und einer Transfereinrichtung 5130, 5336;
- Transport des Pakets innerhalb der Transfereinrichtung 5130, 5336;
- Sortierung des Pakets innerhalb der Transfereinrichtung 5130, 5336;
- Transport des Pakets zwischen der Transfereinrichtung 5130, 5336 und einem Verteilzentrum 5301 für Pakete;
- Sortierung des Pakets innerhalb des Verteilzentrums für Pakete (Paketverteilzentrum)
- Transport des Pakets zwischen zwei Verteilzentren.

### Paket-Bearbeitung in Verteilzentren 5110

Insbesondere enthält die Spalte 5110 Bearbeitungsvorgänge sowie Bearbeitungseinheiten, insbesondere mit Mitteln zur Sortierung von Paketen im Bereich von Verteilzentren.

Nachfolgend werden Ausgestaltungen von Hauptläufen und Sortiervorgängen 5110 erläutert. Die Steuerkomponente 5012 des Logistiksystems 5020 gibt Informationen zu Paketidentifikationsmerkmalen, die eine Identifikation der Pakete ermöglichen, sowie Informationen über die vorgesehenen Übergabepunkte an Netzwerkknoten des Logistiksystems weiter.

Die Steuerkomponente 5012 des Logistiksystems, beziehungsweise das Logistiksystem 5020 erhalten Informationen zu Paketidentifikationsmerkmalen, die eine Identifikation der Pakete ermöglichen, von vorzugsweise mehreren Informationsquellen, beispielsweise bei einer Einlieferung der Pakete durch ein Erfassungsmitteln, durch Identifizierungseinrichtungen wie Scanner und RFID-Leser im Bereich von Verteilzentren, im Bereich von Transfereinrichtungen 5130, 5336.

Die Steuerkomponente 5012 des Logistiksystems, beziehungsweise das Logistiksystem 5020 gibt Informationen zu Paketidentifikationsmerkmalen, die eine Identifikation der Pakete ermöglichen, sowie Informationen über die vorgesehenen Übergabepunkte vorzugsweise an Transfereinrichtungen 5130, 5336 und/oder an Depoteinrichtungen weiter. Die Weitergabe der Informationen zu den Paketidentifikationsmerkmalen sowohl an die Transfereinrichtungen 5130, 5336 und an die Depoteinrichtungen hat den Vorteil, dass die Einlagerung der Pakete in Lagerpositionen einer Lagereinrichtung der Depoteinrichtung 830, 5242, 5243, 5321, 5322 schnell und zuverlässig erfolgt. Ein weiterer Vorteil dieser zweckmäßigen Ausführungsform ist, dass die Einlagerung in die Lagerpositionen der Lagereinrichtung der Depoteinrichtung 830, 5242, 5243, 5321, 5322 ohne einen Einsatz von Sensoreinrichtungen oder sonstigen Erfassungsmittel in der Depoteinrichtung 830, 5242, 5243, 5321, 5322 erfolgen kann.

Netzwerkknoten des Logistiksystems sind insbesondere Bestandteile des Logistiksystems, bei denen Entscheidungen über zu erfolgende Bearbeitungsvorgänge der Pakete umgesetzt werden. Hierbei handelt es sich beispielsweise um Sortiervorgänge 5110, die vorzugsweise in Verteilzentren 5301 für Pakete erfolgen. Beispiele für Netzwerkknoten des Logistiksystems sind vorzugsweise Transfereinrichtungen 5130, 5336 sowie Transporteinheiten 5236 und die Depoteinrichtungen 830, 5242, 5243, 5321, 5322.

Hierbei werden die Paketidentifikationsmerkmale so übertragen, dass die jeweiligen Netzwerkknoten die Pakete unter Berücksichtigung der jeweils ausgewählten Übergabepunkte in den weiteren Transportprozess einbringen.

### Verteilzentrum 5301 und Zustelldepot 5302

Es vorteilhaft, ein zwei- oder mehrstufiges Logistiksystem einzusetzen, bei dem zunächst ein Transport von Paketen zu einem Verteilzentrum erfolgt, dann von einem Verteilzentrum zu einem anderen Verteilzentrum und anschließend von dem anderen Verteilzentrum zu Zustelldepots. Dabei finden beispielsweise folgende Bearbeitungsvorgänge statt:
- Auswahl eines Verteilzentrums 5301, das sich für eine weitere Verteilung der Pakete durch Beladung von Depoteinrichtungen 830, 5242, 5243, 5321, 5322 besonders eignet;
- Eine Initiierung eines Transports zu dem Verteilzentrum 5301 und/oder zu dem Zustelldepot 5302;
- Eine Initiierung eines Transports zu der Depoteinrichtung;
- Ausschleusung der Pakete im Bereich eines Verteilzentrums 5301 oder Zustelldepots 5302

### Auswahl von Übergabepunkten 5120

Die in Spalte 5120 dargestellten Bearbeitungsvorgänge und Bearbeitungseinheiten Mittel zur Auswahl von Übergabepunkten von Paketen unter Verwendung von Depoteinrichtungen 830, 5242, 5243, 5321, 5322.

### Depoteinrichtungen 5242, 5243, 5321, 5322

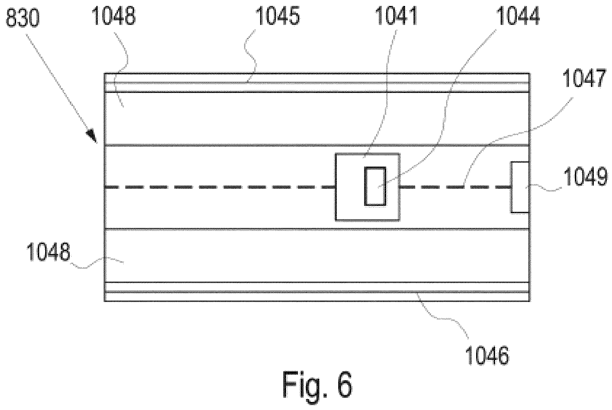

Bei den Depoteinrichtungen 5242, 5243, 5321, 5322 kann es sich um Depoteinrichtungen 830, 5242, 5243, 5321, 5322 handeln, wie sie in der Abbildung 6 dargestellt ist, jedoch ist das Logistiksystem nicht auf Anwendungsfälle mit Depoteinrichtungen 830, 5242, 5243, 5321, 5322 beschränkt und auch bei einem Einsatz von Depoteinrichtungen 830, 5242, 5243, 5321, 5322 können diese anders gestaltet sein, als dies in diesen Abbildungen beispielhaft dargestellt ist.

Die Depoteinrichtungen 5242 können in einer Ausgestaltung eine flexible Anpassung wenigstens einer Lagereinheit 1410 beinhalten.

Die in einer Depoteinrichtung 830, 5242, 5243, 5321, 5322 eingelagerten Pakete werden in der Depoteinrichtung 830, 5242, 5243, 5321, 5322 zu den Übergabepunkten transportiert.

Die Depoteinrichtung 830, 5242, 5243, 5321, 5322 enthält eine Übergabeeinrichtung für die Pakete als Teil der Depoteinrichtung 830, 5242, 5243, 5321, 5322.

### Beladungsvorbereitung der Depoteinrichtungen 5130

Die in Spalte 5130 dargestellten Bearbeitungsvorgänge und Bearbeitungseinheiten enthalten Mittel und Verfahrensschritte 5233, 5331-5336 zu einer Beladungsvorbereitung der Depoteinrichtungen, insbesondere im Bereich von Transfereinrichtungen 5130, 5336.

Der Bearbeitungsvorgang 5130 beinhaltet einzelne, mehrere oder sogar sämtliche der nachfolgend dargestellten Bearbeitungsvorgänge für die Pakete:
- Transfer der Pakete aus einem Verteilzentrum;
- Vereinzelung der Pakete;
- Transport der Pakete von einem Verteilzentrum zu den Depoteinrichtungen;
- Transport der Pakete von einer oder mehreren ersten Depoteinrichtungen zu einer oder mehreren zweiten Depoteinrichtungen;
- Vorbereitung der anhand von Spalte 5140 dargestellten Einlagerung der Pakete in die Depoteinrichtungen 5242, 5243, 5321, 5322.

Die in Spalte 5130 dargestellten Bearbeitungsvorgänge und Bearbeitungseinheiten fördern einen Transfer von Paketen in Depoteinrichtungen 830, 5242, 5243, 5321, 5322. Es handelt sich hierbei insbesondere um Bearbeitungsvorgänge, bei denen mehrere Pakete vorzugsweise unmittelbar hintereinander zu den Depoteinrichtungen 830, 5242, 5243, 5321, 5322 transportiert werden und danach vorzugsweise in die Depoteinrichtungen 830, 5242, 5243, 5321, 5322 eingelagert werden. Die Einlagerung der Pakete in die Depoteinrichtungen 830, 5242, 5243, 5321, 5322 erfolgt vorzugsweise durch die Einlagerung der Pakete in Lagerpositionen von Lagereinrichtungen der Depoteinrichtungen 830, 5242, 5243, 5321, 5322.

Um die Einlagerung der Pakete in die Depoteinrichtungen 830, 5242, 5243, 5321, 5322 möglichst schnell durchzuführen und/oder um die Entnahme von Paketen aus den Depoteinrichtungen 830, 5242, 5243, 5321, 5322 möglichst schnell und zuverlässig durchzuführen, ist es zweckmäßig, Transfereinrichtungen einzusetzen, die beispielhaft in den Abbildungen 6, 8 und 12 dargestellt sind.

### Transfereinrichtung 5336

Ein weiteres Bearbeitungsmodul, dass durch Steuerkomponente 5012 des Logistiksystems, beziehungsweise das Logistiksystem 5020 gesteuert wird, ist ein Sortiermodul 5130, 5336 innerhalb des Verteilzentrums, das vorzugsweise auch zur Ausschleusung der Pakete zu den Depoteinrichtungen 830, 5242, 5243, 5321, 5322 dient.

### Beladung der Depoteinrichtungen 5140

Die in Spalte 5140 dargestellten Bearbeitungsvorgänge und Bearbeitungseinheiten enthalten Mittel zur Beladung der Depoteinrichtungen unter Einbeziehung von Paketidentifikationsmerkmalen für die einzelnen Pakete.

### Ein- und Auslagerung 5241

Ebenso können Verfahren zur Unterstützung eines Einlagerns der Pakete in Lagerpositionen der Depoteinrichtung 830, 5242, 5243, 5321, 5322 durch die Transporteinheit 1241, 1641 sowie weitere Einrichtungen, beispielsweise einen Schieber 1430 unterstützt werden.

### Lagereinrichtungen 5342

Eine vorteilhafte Ausführungsform dieses Verfahrens zeichnet sich dadurch aus, dass anhand von Paketidentifikationsmerkmalen eine Zuordnung der Pakete zu vorherbestimmten Lagerpositionen erfolgt, dass sich entlang eines in der Depoteinrichtung 830, 5242, 5243, 5321, 5322 befindlichen Transportweges wenigstens eine Transporteinheit 1241, 1641 so bewegt, dass sie Pakete aus einem Sendungsstrom von Paketen anhand der Paketidentifikationsmerkmale entnehmen kann, dass unter Einsatz der Transporteinheit 1241, 1641 ein Transport der Pakete von dem Sendungsstrom in die Depoteinrichtung 830, 5242, 5243, 5321, 5322 ermöglicht wird, wobei der Transport der Transporteinheit 1041, 1241, 1641 innerhalb der Depoteinrichtung 830, 5242, 5243, 5321, 5322 unter Berücksichtigung der den jeweiligen Paketen anhand der Paketidentifikationsmerkmale zugeordneten Lagerpositionen gesteuert wird.

### Transport und Aufstellung der Depoteinrichtungen an Standorten 5150

Die in Spalte 5150 dargestellten Bearbeitungsvorgänge und Bearbeitungseinheiten enthalten Mittel zum Transport der Depoteinrichtungen und zur Aufstellung der Depoteinrichtungen an Standorten.

### Steuereinrichtung autonomer oder teil-autonomer Transport 5251

Zum Logistiksystem 5020 gehören vorzugsweise auch Steuereinrichtungen 5150, 5151 für eine Steuerung des Transportes der Pakete zu den jeweiligen Übergabepunkten. Diese stellen sicher, dass ein Transport einer die jeweiligen Pakete enthaltenden Depoteinrichtung 830, 5242, 5243, 5321, 5322 zu dem jeweiligen Übergabepunkt erfolgt.

Die Steuereinrichtungen 5150, 5151 können Bestandteile der Steuerkomponente 5012 sein und/oder mit der Steuerkomponente 5012 zusammenwirken.

### Benutzerkomponente 5351

Es ist vorteilhaft, das Logistiksystem, beziehungsweise eine oder mehrere der Komponenten des Logistiksystems so auszugestalten, dass sie über eine Benutzerschnittstelle mit Benutzerkomponenten 5351 interagieren, insbesondere auf Anforderungen zur Übergabe von Paketen reagieren können. Bei der Benutzerkomponente 5351 handelt es sich beispielsweise um ein Smartphone, eine Smartwatch oder um eine smarte Brille.

### Übergabe Pakete an Empfänger 5160

Die in Spalte 5160 dargestellten Bearbeitungsvorgänge und Bearbeitungseinheiten enthalten in einer besonders bevorzugten Ausführungsform in der Erfindung Mittel zur Übergabe von Paketen an Empfänger.

### (Lokale) Steuereinheit zur Übergabe von Paketen 5170

Eine Steuereinheit 5170, 5171 steuert Bearbeitungsvorgänge im Bereich der Depoteinrichtungen, insbesondere bei Aufstellung der Depoteinrichtungen im Bereich der Aufstellorte.

### Übergabe von Paketen an individuellen Übergabepunkten 5175

Die Ausgestaltungen von Bearbeitungsvorgängen zur Durchführung und Verbesserung einer Übergabe von Paketen an individuellen Übergabepunkten sind in Spalte 5175 dargestellt.

Eine vorteilhafte Variante ist die Übergabe an einen einzelnen Empfänger an einem individuellen Übergabepunkt durch die Depoteinrichtung selbst. So kann die Depoteinrichtung nacheinander verschiedene individuelle Adressen anfahren und dort eine Übergabe eines oder mehrerer Pakete vornehmen.

individuellen Übergabepunkt, der mit dem Empfänger vereinbart und/oder dem Empfänger mitgeteilt wird.

### Anforderungseinheit für Übergabe an individuellen Übergabepunkten 5180

Die Anforderungseinheit 5180, 5281 so eingerichtet, dass sie - vorzugsweise über eine Benutzerschnittstelle mit Benutzerkomponenten 5351 und/oder einer APP, insbesondere eine Benutzer-APP 5021, 5022 interagieren, insbesondere auf Anforderungen zur Übergabe von Paketen reagieren kann. Bei der Benutzerkomponente 5351 handelt es sich beispielsweise um ein Smartphone, eine Smartwatch oder um eine smarte Brille. Dabei ist die Benutzerschnittstelle so ausgebildet, dass sie eine Übergabe von Paketen veranlassende und/oder die Übergabe der Pakete verbessernde Informationen übermitteln kann. Beispiele für die übermittelbaren Informationen sind Paketidentifikationsmerkmale, Benutzeridentifikationsmerkmale, Authentifizierungsdaten und Benachrichtigungsinformationen.

### Einlieferung von Paketen 5190

Die Ausgestaltungen von Bearbeitungsvorgängen und Bearbeitungseinheiten im Bereich einer Einlagerung von Paketen, Warenobjekten und retournierten Waren, vorzugsweise mittels einer lokalen Steuereinheit zur Ermöglichung einer Einlieferung der Pakete, sind in Spalte 5190 dargestellt.

### Rücktransport der Depoteinrichtung und Auslagerung 5195 der Pakete

Es ist vorteilhaft, eine Anzahl von nicht an Empfänger übergebenen Pakete möglichst gering zu halten und Bearbeitungsvorgängeso durchzuführen, dass möglichst viele der in der Depoteinrichtung befindlichen Pakete einschließlich im Bereich der Depoteinrichtung 830, 5242, 5243, 5321, 5322 an Empfänger übergeben werden.

### Mobile Depoteinrichtung

### Abbildung 6

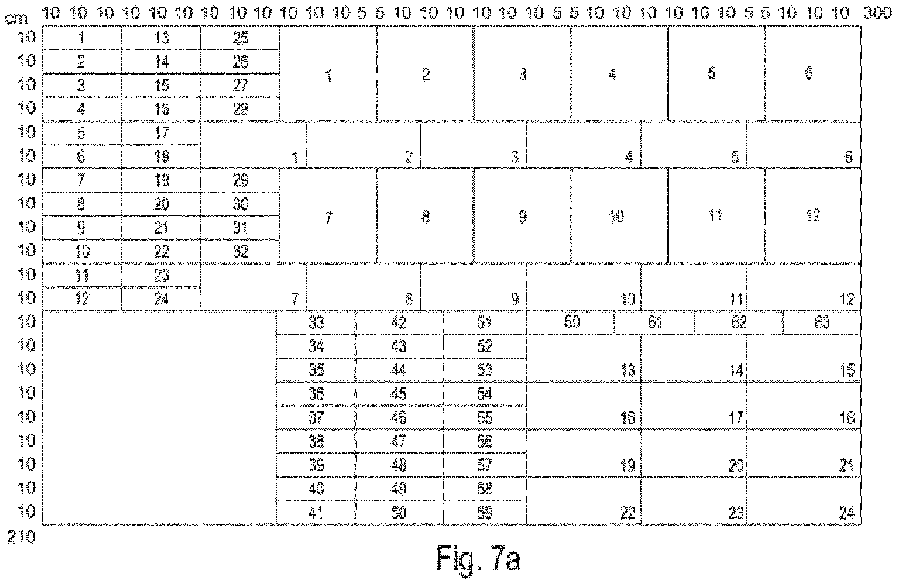

Die Abbildung 6 zeigt eine Aufsicht auf eine horizontale Querschnittsebene eines Logistikfahrzeuges mit wenigstens zwei Regalen. Der Laderaum einer Depoteinrichtung 830 hat erfindungsgemäß folgenden Innenausbau:
An beiden Längsseiten befindet sich jeweils eine Lagereinrichtung (Regaleinheit) 1048 zur Einlagerung von Paketen. Beispielhafte Gestaltung der Lagereinrichtung siehe Abb. 7a bis 7d. Besonders vorteilhaft ist auch eine jederzeit neu konfigurierbare, noch vorteilhafter eine automatisch konfigurierbare Lagereinrichtung (Regaleinheit). Zwischen der jeweiligen Lagereinrichtung (Regaleinheit) 1048 und der Außenhaut des Laderaums der Depoteinrichtung 830 befindet sich die Schiebereinheit 1045 und 1046 zum Verschieben von Paketen aus der Lagereinrichtung (Regaleinheit) 1048 auf die Transporteinheit 1041. Die Transporteinheit 1041 transportiert das Paket 1044 entlang der Führungsschiene 1047 zur Übergabeeinrichtung 1049.

### Abbildungen 7a - 7d

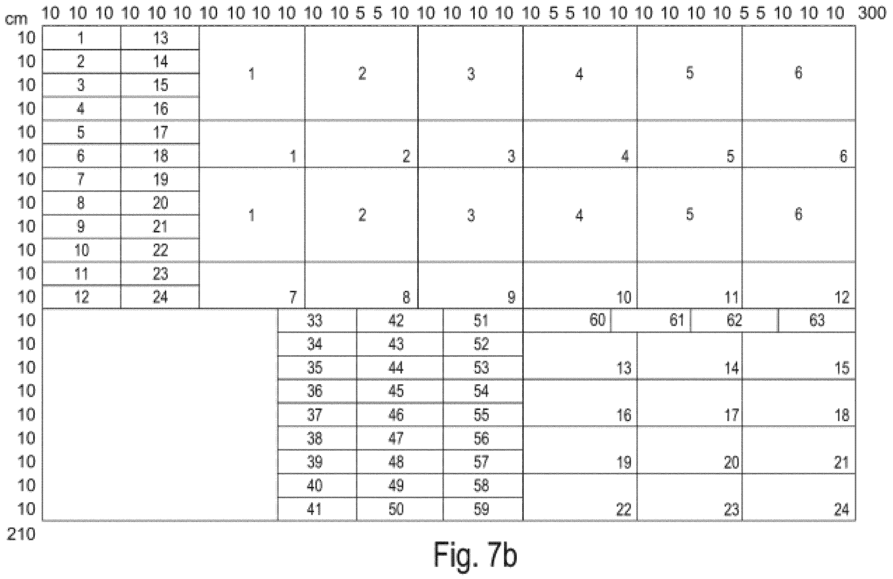

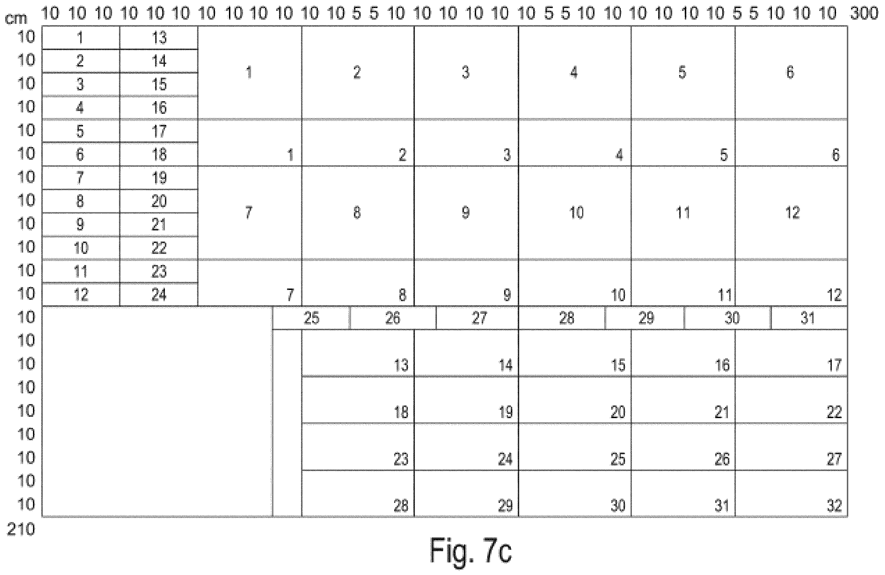

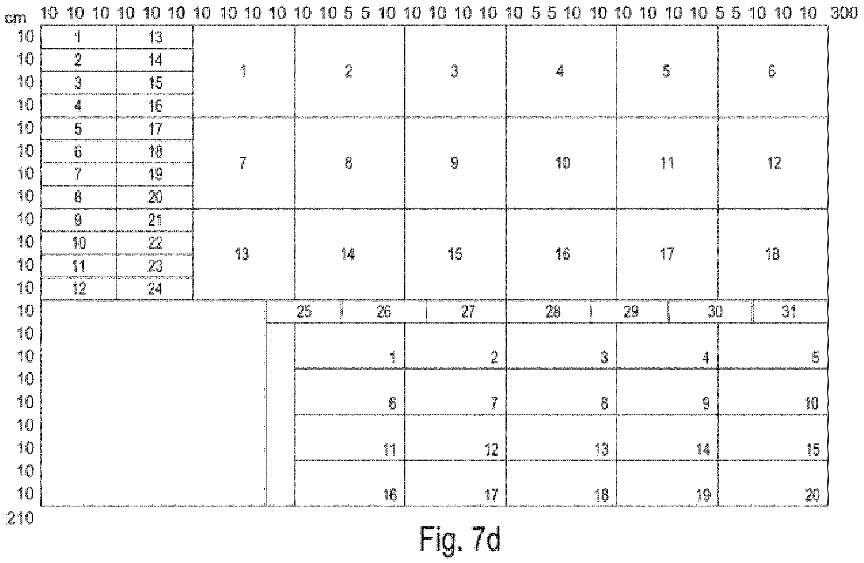

Die Abbildungen 7a-d zeigen jeweils eine vorteilhafte Fachkonfiguration eines erfindungsgemäßen Regals. Die Lagereinrichtungen (Regaleinheiten), welche sich innerhalb von Depoteinrichtungen zur Einlagerung von Paketen befinden können wie in den Abbildung 7a bis 7d eine fest fixierte Fächerkonfiguration ausweisen, so z.B. in Abbildung 7a mit insgesamt 99 Fächern in der Aufteilung mit 63 Fächern der Größe S (30cm x 10cm x 50cm), 24 Fächern der Größe M (35cm x 20cm x 50cm) und 12 Fächern der Größe L (35cm x 40 cm x 50cm), der Abbildung 7b mit insgesamt 91 Fächern in der Aufteilung mit 55 Fächern der Größe S (30cm x 10cm x 50cm), 24 Fächern der Größe M (20cm x 40cm x 50cm) und 12 Fächern der Größe L (40cm x 40 cm x 50cm), der Abbildung 7c mit insgesamt 75 Fächern in der Aufteilung mit 31 Fächern der Größe S (30cm x 10cm x 50cm), 32 Fächern der Größe M (20cm x 40cm x 50cm) und 12 Fächern der Größe L (40cm x 40 cm x 50cm) und der Abbildung 7d mit insgesamt 69 Fächern in der Aufteilung mit 31 Fächern der Größe S (30cm x 10cm x 50cm), 20 Fächern der Größe M (20cm x 40cm x 50cm) und 18 Fächern der Größe L (40cm x 40 cm x 50cm).

### Abbildungen 10, 11

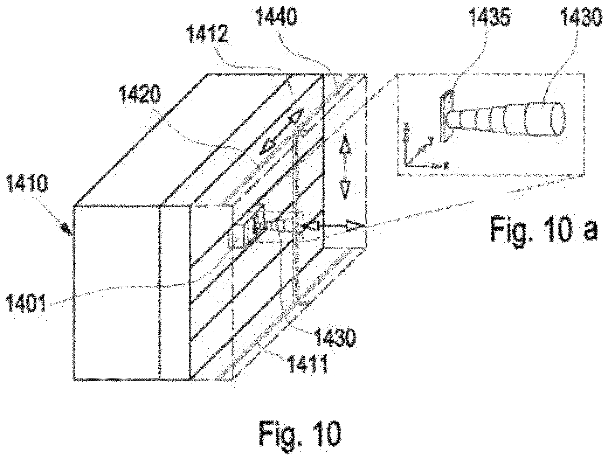

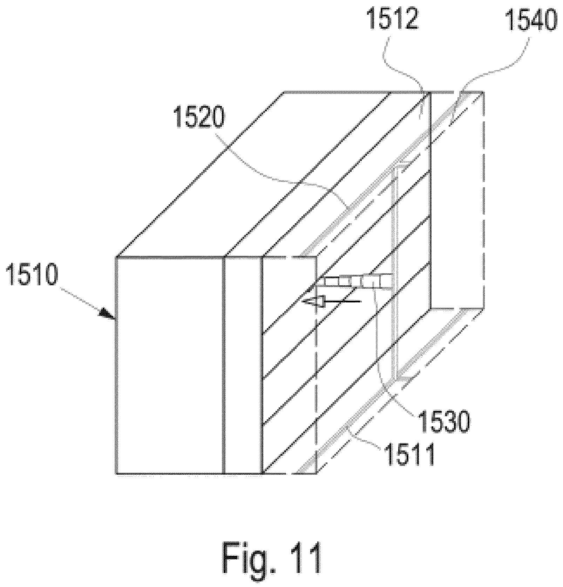

Die Abbildungen 10 und 11 zeigen ein Ausführungsbeispiel einer erfindungsgemäßen Lagereinheit 1410 mit einer Regaleinheit und einer Schiebereinheit 1420 zum Verschieben von Paketen 1401 aus einem Regal 1412, 1512.

Eine Führungsschiene 1420, beziehungsweise 1520 führt beweglich eine weitere Führungsschiene auf einer vorgegebenen Bahn, insbesondere in horizontaler (y-Richtung) Richtung und/oder vertikaler (z-Richtung) Richtung, so dass ein Schieber 1430 gelagert und entlang einer vollständigen Seitenfläche der Regaleinheit verfahrbar ist.

An dem Schieber 1430 ist ausfahrbar ein Stempel 1435 angeordnet und in X - Richtung verschiebbar, so dass der Schieber 1430 Pakete 1401 aus dem Regal 1412,1512 befördern kann, insbesondere auf eine Transporteinheit.

Es ist alternativ und/oder zusätzlich zweckmäßig, die Depoteinrichtungen 830, 5242, 5243, 5321, 5322 mit einem oder mehreren aus Vereinfachungsgründen nicht dargestellten Greifarmen auszustatten.

Die Greifarme sind vorzugsweise im Inneren der Logistikfahrzeuge angeordnet und vorzugsweise so lang, dass sie einen Transport von Paketen zwischen Lagerpositionen der Depoteinrichtungen 830, 5242, 5243, 5321, 5322 und einer Übergabeeinrichtung 1601 der Depoteinrichtungen 830, 5242, 5243, 5321, 5322 vorzugsweise einschließlich einer Entnahme aus der Übergabeeinrichtung 1601 und einer Entnahme aus Lagerpositionen der Depoteinrichtung durchführen können.

Es ist ferner vorteilhaft, die Depoteinrichtungen 830, 5242, 5243, 5321, 5322 mit wenigstens einem Greifarm, vorzugsweise ähnlich den Greifarmen der Roboter im Bereich der Endstellen auszustatten.

### Transporteinheit

### Abbildung 8

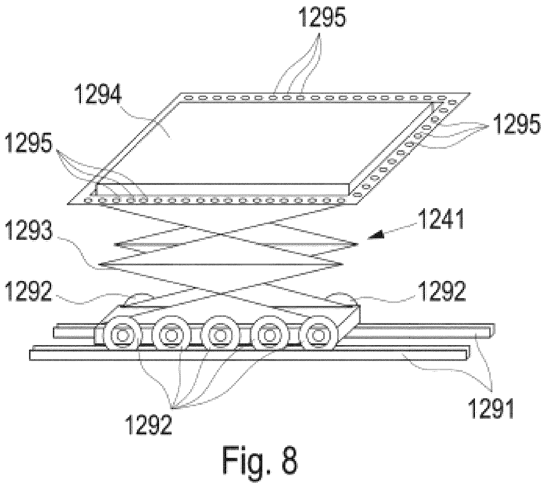

Die Abbildung 8 zeigt eine perspektivische Darstellung einer für das erfindungsgemäße Verfahren einsetzbaren Transporteinheit. Transporteinheiten unterstützen die Ein- und Auslagerung der Pakete in und aus Lagerpositionen von Lagereinrichtungen der Depoteinrichtungen sowie den Transport von und zu einer Übergabeeinrichtung der Depoteinrichtung. Die erfindungsgemäße Transporteinheit 1241 wird mittels Rädern 1292 auf Schienen 1291 geführt, was beispielsweise für einen Einsatz innerhalb von Depoteinrichtungen und/oder im Bereich von Transfereinrichtungen sinnvoll ist.

Die Transporteinheit 1241 weist eine höhenverstellbare Einrichtung 1293 auf, die beispielhaft scharnierförmig ausgebildet ist. Die höhenverstellbare Einrichtung 1293 dient der höhenverstellbaren Lagerung einer Transferplattform 1294. Die Transferplattform 1294 weist vorzugsweise ein Transportband zum Transport von Paketen auf. Mittels der Lichtschrankensensoren 1295 wird geprüft, ob sich bei Übergabe eines Pakets auf und/oder von der Transferplattform 1294 das Paket vollständig und transportgerecht auf der Transferplattform 1294 befindet bzw. von der Transferplattform 1294 vollständig an die zur übergebenen Einheit übergeben wurde.

### Abbildung 9

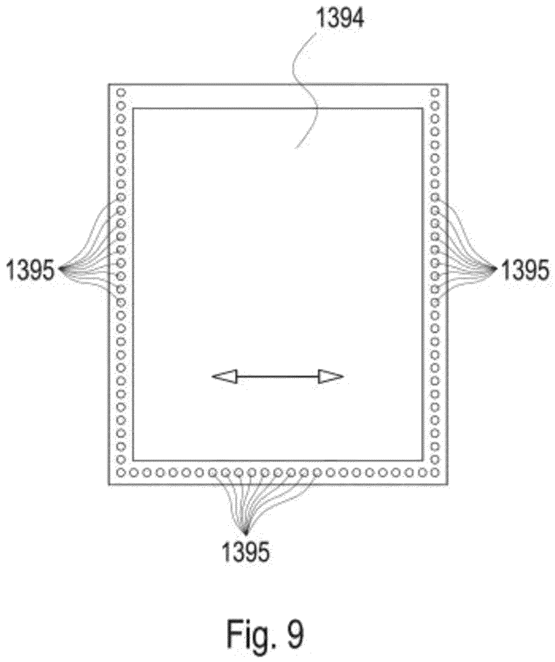

Die Abbildung 9 zeigt eine Aufsicht auf eine für das erfindungsgemäße Verfahren einsetzbare Transporteinheit; Die Transferplattform 1394 weist vorzugsweise ein Transportband zum Transport von Paketen auf. Mittels des Transportbandes kann ein Transfer eines Pakets, beispielsweise auf die Transferplattform und/oder von der Transferplattform in eine Lagerposition einer Depoteinrichtung erfolgen. Mittels der Lichtschrankensensoren 1395 wird geprüft, ob sich bei Übergabe eines Pakets auf und/oder von der Transferplattform 1394 das Paket vollständig und transportgerecht auf der Transferplattform 1394 befindet bzw. von der Transferplattform 1394 vollständig an die zur übergebenen Einheit übergeben wurde.

### Abbildungen 12a, 12b

In vorteilhaften Ausführungsformen der Erfindung sind wenigstens einzelne der Depoteinrichtungen 830, 5242, 5243, 5321, 5322 so ausgestaltet, dass sich in ihnen Transporteinheiten so bewegen und/oder so gesteuert werden, dass sie einzelne mehrere oder sämtliche der nachfolgenden Bearbeitungsvorgänge durchführen und/oder erleichtern können:
- Transport von Paketen zwischen der Übergabeeinrichtung 1601 und Lagerpositionen der Depoteinrichtung;
- Durchführung und/oder Erleichterung der Einlagerung von Paketen in die Lagerpositionen der Depoteinrichtung;
- Durchführung und/oder Erleichterung der Auslagerung von Paketen aus den Lagerpositionen der Depoteinrichtung
- Transport von Paketen zwischen den Lagerpositionen der Depoteinrichtung und der Übergabeeinrichtung 1601.

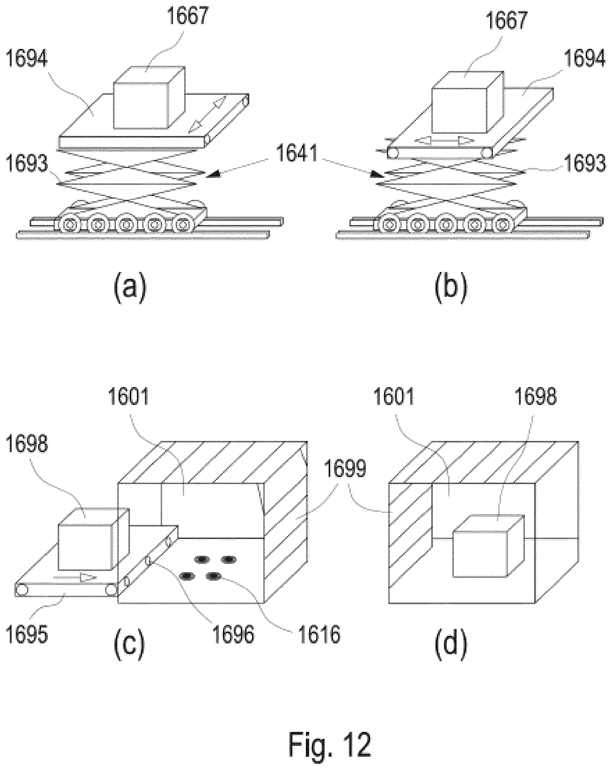

Die in den Abbildungen 12a und 12b dargestellte erfindungsgemäße Transporteinheit 1641 ist auf Schienen geführt, was beispielsweise für einen Einsatz innerhalb von Depoteinrichtungen und/oder im Bereich von Transfereinrichtungen sinnvoll ist.

Die Transporteinheit 1641 weist eine höhenverstellbare Einrichtung 1693 auf, die beispielhaft scharnierförmig ausgebildet ist. Die höhenverstellbare Einrichtung 1693 dient der höhenverstellbaren Lagerung einer Transferplattform 1694. Die Transferplattform 1694 weist vorzugsweise ein Transportband zum Transport von Paketen, beispielsweise des in Abbildung 12a beispielhaft eingezeichneten Pakets 1667 auf. Mittels des Transportbandes kann ein Transfer des Pakets 1667, beispielsweise auf die Transferplattform und/oder von der Transferplattform in eine Lagerposition einer Depoteinrichtung 830, 5242, 5243, 5321, 5322 unterstützt werden.

Die Transferplattform 1694 ist vorzugsweise drehbar gelagert. Hierdurch wird beispielsweise erleichtert, dass die Transferplattform 1694 Pakete von einem Förderband einer Transfereinrichtung 5336 Pakete aufnehmen kann und/oder - vorzugsweise nach einer Drehung der Transfereinrichtung 5336 - Pakete in Lagerpositionen von Lagereinrichtungen der Depoteinrichtungen transferieren kann.

Die Transporteinheit 1641 stellt eine bevorzugte Ausführungsform der in dieser Anmeldung dargestellten Transporteinheiten 1041, 1241, 1641 dar.

Es ist ihr gleichfalls möglich, die Transporteinheit 1641 als eine Übergabeeinheit einzusetzen, die Pakete zwischen der Depoteinrichtung und individuellen Übergabepunkten für eine Übergabe von Paketen an einzelne Empfänger und/oder von einzelnen Einlieferern transportieren kann.

### Übergabe

### Überblick

Für eine Übergabe eines Warenobjektes an den Empfänger wird das das Warenobjekt enthaltende Paket zunächst aus der Lagerposition der Depoteinrichtung ausgelagert, auf die Transferplattform 1694 der Transporteinheit 1641 und anschließend in die Übergabeeinrichtung 1601 befördert. Eine Erleichterung der Auslagerung von Paketen aus den Lagerpositionen der Depoteinrichtung kann alternativ und/oder zusätzlich unter Einsatz der in den Abbildungen 10 und 11 dargestellten Schiebereinheit 1420 erfolgen.

Die Übergabe des wenigstens einen in dem Paket enthaltenen Warenobjektes erfolgt vorzugsweise, indem es dem Empfänger des Warenobjektes zur Entnahme bereitgestellt wird. Alternativ kann das Warenobjekt in eine Warenschleuse als Übergabeschleuse verbracht werden.

### Abbildung 12 (c und d)

Die Abbildungen 12c und 12d zeigen eine Prinzipdarstellung einer Übergabe eines in einem Paket 1698 befindlichen Warenobjektes in einem Bereich einer Übergabeeinrichtung, zu der es bei der Übergabe an Empfänger 5160 sowie bei der lokalen Einlieferung 5190 kommt.

Die Übergabeeinrichtung 1601 dient zur Übergabe von Paketen. Bei der Übergabe von Paketen kann es sich um die Übergabe von Paketen aus einer Lagereinheit der Depoteinrichtung an einen Empfänger und/oder die Annahme von Paketen von Versendern und die anschließende Einlagerung des Paketes in eine Lagereinheit in die Depoteinrichtung handeln.

Nachdem ein Empfänger ein Paket entnommen hat, schließt sich die Übergabeeinrichtung 1601 wieder. Die Transporteinheit 1641 fährt an die Übergabeeinrichtung 1601 heran und prüft mittels der Lichtschranke, ob sich in der Übergabeeinrichtung 1601 ein Paket befindet. In dem in Abbildung 12c dargestellten Betriebszustand der Übergabeeinrichtung 1601 meldet die Lichtschranke 1696, dass kein Paket mehr in der Übergabeeinrichtung vorhanden ist. Die Übergabe ist damit erfolgreich abgeschlossen. Vorzugsweise erhält nun der Einlieferer des Pakets, insbesondere der Versender des Pakets eine Benachrichtigung über die erfolgreiche Übergabe, insbesondere die erfolgreiche Übergabe an den Empfänger des Pakets. Sofern das Paket keinem individualisierten Empfänger zugeordnet war - dies ist beispielsweise dann der Fall, wenn das Paket ein Warenobjekt ist - erhält der Einlieferer vorzugsweise eine Benachrichtigung über die Tatsache, dass das Paket erfolgreich übergeben wurde.

Falls sich ein Paket oder ein sonstiger Gegenstand in der Übergabeeinrichtung 1601 befindet, prüft die Depoteinrichtung und/oder das System, ob sich der Empfänger des Paketes noch in unmittelbarer Nähe der Depoteinrichtung befindet. Sollte dies der Fall sein, so wird der Empfänger unmittelbar via App kontaktiert und gefragt, ob er sein Paket entnehmen möchte. Sollte der Empfänger nicht antworten bzw. dies verneinen, so wird das Paket von einer Transporteinheit und/oder von einem Greifarm wieder in eine der Lagerpositionen der Depoteinrichtung, vorzugsweise in die Lagerposition, aus der das Paket entnommen wurde, transportiert.

Der Rücktransport des Pakets in eine der Lagerpositionen der Depoteinrichtung ist auch dann vorteilhaft, wenn sich der Empfänger nicht mehr in unmittelbarer Nähe der Depoteinrichtung befinden würde.

### Mehrwegbehälter

### Abbildung 13

Abbildung 13 zeigt ein für die Übergabe besonders bevorzugtes Paket aus dem Stand der Technik. Es zeigt einen beispielhaften Mehrwegbehälter aus der Patentanmeldung mit der Veröffentlichungsnummer EP 3 865 417 A1. Ein solcher oder ähnlicher Mehrwegbehälter wird im Sinne dieser Anmeldung als Paket behandelt und eignet sich besonders zur Durchführung des Verfahrens in Abbildung 1.

### Zuordnung von Paketen zu Empfängern auf Grundlage von Empfängerattributen

Während in konventionellen Paketbearbeitungssystemen Bearbeitungen von Paketen einen Transport von Paketen von einem festen Versender zu einem oder mehreren vorab festgelegten Empfängern vorsehen - dies ist mit den in der vorliegenden Anmeldung dargestellten Bearbeitungsvorgängen gleichfalls möglich - erlauben die in dieser Anmeldung als vorteilhaft dargestellten Bearbeitungsvorgänge eine flexible Zuordnung von Paketen zu Empfängern und/oder Übergabepunkten, wobei es besonders vorteilhaft ist, eine flexible Zuweisung eines finalen Empfängers und/oder eines finalen Übergabepunktes, der insbesondere aus den in dieser Anmeldung dargestellten gemeinsamen optimierten Übergabepunkten und individuellen Übergabepunkten für einen individuelle Empfänger als finalen Empfänger ausgewählt werden kann, vorzunehmen.

## Patentansprüche

1. Verfahren zur Übergabe einer Vielzahl von Warenobjekten an mehrere Empfänger, wobei die Warenobjekte in Paketen gelagert und/oder transportiert werden und in den Paketen in eine Depoteinrichtung (830, 5242, 5243, 5321, 5322) transferiert und dann in der Depoteinrichtung (830, 5242, 5243, 5321, 5322) gelagert werden, wobei die Depoteinrichtung (830, 5242, 5243, 5321, 5322) eine flexible Lagereinheit (1048,1410) sowie mindestens eine Transporteinheit (1041, 1241, 1641, 5341) zur Unterstützung der Ein- und Auslagerung der Pakete in und aus Lagerpositionen der Lagereinheit (1048, 1410) sowie für den Transport von und zu einer Übergabevorrichtung aufweist, wobei wenigstens ein Teil der Pakete als Mehrwegbehälter, die mit individuellen Kennungen versehen sind, so gestaltet ist, dass sie eine Umverpackung für das Warenobjekt darstellen und dass das Warenobjekt aus dem Paket entnehmbar ist, wobei die Übergabevorrichtung so eingerichtet ist, dass bei wenigstens einem Teil der Pakete jeweils mindestens ein in dem Paket befindliches Warenobjekt einem ersten Empfänger zur Entnahme zur Verfügung gestellt wird, so dass eine Übergabe des Warenobjekts als erster Übergabevorgang durchgeführt wird und die Übergabevorrichtung ein Mittel enthält, das eine Übergabe des Pakets verhindern kann, wobei das Mittel eine steuerbare Halte- oder Fixiereinrichtung zur lösbaren Sicherung und Verhinderung der Entnahme eines Pakets aufweist, das Paket, das nicht an den Empfänger des Warenobjektes übergeben wird, in der Depoteinrichtung (830, 5242, 5243, 5321, 5322) verbleibt, und das Paket nach dem ersten Übergabevorgang mit mindestens einem weiteren Warenobjekt befüllt wird und für einen weiteren Übergabevorgang für das weitere Warenobjekt an einen weiteren Empfänger eingesetzt wird,
**dadurch gekennzeichnet, dass**
die eine eindeutige Kennung aufweisenden Mehrwegbehälter mit einem Paketidentifikationscode verknüpft werden, wobei die mit der Kennung versehenen Mehrwegbehälter bis zu einem ersten Übergabevorgang mit dem ersten Paketidentifikationscode versehen werden und Bearbeitungsvorgänge des Mehrwegbehälters als Paket zunächst unter Berücksichtigung des ersten Paketidentifikationscodes erfolgen, wobei die Kennung als Information zu einem Paketidentifikationsmerkmal zu einer Steuerkomponente (5012) eines Logistiksystems (5020) übertragen wird, wobei die Steuerkomponente (5012) ferner Informationen zu den Empfängern der jeweiligen Pakete erhält, wobei nach einer Übergabe des mindestens einen in dem Mehrwegbehälter enthaltenen Warenobjekts die zuvor vorgenommene Verknüpfung zwischen dem die Kennung aufweisenden Mehrwegbehälter und dem Paketidentifikationscode durch die Steuerkomponente (5012) des Logistiksystems (5020) aufgehoben wird, wobei der mit der Kennung versehene Mehrwegbehälter mit einem zweiten Paketidentifikationscode verknüpft wird, wobei die weiteren Bearbeitungsvorgänge des Mehrwegbehälters als ein neues Paket unter Berücksichtigung des zweiten Paketidentifikationscodes erfolgt.

2. Verfahren gemäß Anspruch 1, wobei vor oder bei wenigstens einem der Übergabevorgänge ein Entscheidungsvorgang erfolgt, ob ein Paket zu dem Teil der Pakete gehört, bei denen mindestens ein in dem Paket befindliches Warenobjekt einem Empfänger zur Entnahme zur Verfügung gestellt wird, eine Übergabe des Pakets jedoch verhindert wird, so dass das Paket nicht an den Empfänger übergeben wird, oder ob das Paket zu einem weiteren Teil von Paketen gehört, die in dem Übergabevorgang an den jeweiligen Empfänger übergeben werden.

## Claims

1. Method for handover of a plurality of goods objects to a plurality of recipients ,
wherein the goods objects are stored and/or transported in parcels and are transferred in the parcels to a depot facility (830, 5242, 5243, 5321, 5322) and then stored in the depot facility (830, 5242, 5243, 5321, 5322), the depot facility (830, 5242, 5243, 5321, 5322) comprising a flexible storage unit (1048, 1410) and at least one transport unit (1041, 1241, 1641, 5341) for supporting the storage and removal of the parcels into and from storage positions of the storage unit (1048, 1410) and for transport to and from a transfer device, at least some of the parcels being designed as reusable containers which are provided with individual identifiers in such a way that they constitute an outer packaging for the goods object and that the goods object can be removed from the parcel, wherein the handover device is arranged such that, for at least some of the parcels, in each case at least one goods object located in the parcel is made available to a first recipient for removal, so that a handover of the goods object is carried out as a first handover operation and the handover device contains a means which can prevent a handover of the parcel, wherein the means comprises a controllable holding or fixing device for releasably securing and preventing the removal of a parcel, the parcel which is not transferred to the recipient of the object of goods remains in the depot facility (830, 5242, 5243, 5321, 5322), and the parcel is filled with at least one further object of goods after the first transfer operation and is used for a further transfer operation for the further object of goods to a further recipient,
**characterised in that**
the returnable containers having a unique identifier are linked to a parcel identification code, the returnable containers provided with the identifier being provided with the first parcel identification code up to a first transfer operation and processing operations of the returnable container as a parcel initially taking into account the first parcel identification code, the identifier being transmitted as information on a parcel identification characteristic to a control component (5012) of a logistics system (5020), the control component (5012) also receiving information on the recipients of the respective parcels, wherein after a handover of the at least one goods object contained in the returnable container, the link previously made between the returnable container having the identifier and the parcel identification code is cancelled by the control component (5012) of the logistics system (5020), wherein the returnable container provided with the identifier is linked to a second parcel identification code, wherein the further processing operations of the returnable container are carried out as a new parcel taking into account the second parcel identification code.

2. The method according to claim 1, wherein a decision process takes place before or during at least one of the handover operations as to whether a parcel belongs to the part of the parcels in which at least one goods object located in the parcel is made available to a recipient for removal, but a handover of the parcel is prevented so that the parcel is not handed over to the recipient, or whether the parcel belongs to a further part of parcels which are handed over to the respective recipient in the handover operation.

## Revendications

1. Procédé de transfert d'une pluralité d'objets marchandises à plusieurs destinataires , les objets marchandises étant stockés et/ou transportés dans des paquets et transférés dans les paquets vers un dispositif de dépôt (830, 5242, 5243, 5321, 5322) et sont ensuite stockés dans le dispositif de stockage (830, 5242, 5243, 5321, 5322), le dispositif de stockage (830, 5242, 5243, 5321, 5322) comprenant une unité de stockage flexible (1048, 1410) et au moins une unité de transport (1041, 1241, 1641, 5341) pour assister le stockage et le déstockage des paquets dans et hors des positions de stockage de l'unité de stockage (1048, 1410) ainsi que pour le transport depuis et vers un dispositif de transfert, au moins une partie des paquets étant conçue comme des récipients réutilisables qui sont pourvus d'identifications individuelles, de telle sorte qu'ils constituent un suremballage pour l'objet de marchandise et que l'objet de marchandise puisse être retiré du paquet, le dispositif de transfert étant agencé de telle sorte que, pour au moins une partie des paquets, au moins un objet de marchandise se trouvant dans le paquet est respectivement mis à la disposition d'un premier destinataire pour le prélèvement, de sorte qu'un transfert de l'objet de marchandise est effectué comme première opération de transfert et le dispositif de transfert contient un moyen qui peut empêcher un transfert du paquet, le moyen présentant un dispositif de maintien ou de fixation pouvant être commandé pour sécuriser de manière amovible et empêcher le prélèvement d'un paquet, le paquet qui n'est pas remis au destinataire de l'objet de marchandise restant dans le dispositif de dépôt (830, 5242, 5243, 5321, 5322), et le paquet étant rempli, après la première opération de remise, d'au moins un autre objet de marchandise et étant utilisé pour une autre opération de remise pour l'autre objet de marchandise à un autre destinataire,
**caractérisé en ce que**
les récipients réutilisables présentant un identifiant unique sont associés à un code d'identification de paquet, les récipients réutilisables munis de l'identifiant étant munis du premier code d'identification de paquet jusqu'à une première opération de transfert et les opérations de traitement du récipient réutilisable en tant que paquet s'effectuant d'abord en tenant compte du premier code d'identification de paquet, l'identifiant étant transmis en tant qu'information sur une caractéristique d'identification de paquet à un composant de commande (5012) d'un système logistique (5020), le composant de commande (5012) recevant en outre des informations sur les destinataires des paquets respectifs, dans lequel, après un transfert de l'au moins un objet de marchandise contenu dans le conteneur réutilisable, la liaison effectuée auparavant entre le conteneur réutilisable présentant l'identification et le code d'identification de paquet est annulée par le composant de commande (5012) du système logistique (5020), le conteneur réutilisable pourvu de l'identification étant associé à un deuxième code d'identification de paquet, les autres opérations de traitement du conteneur réutilisable s'effectuant comme un nouveau paquet en tenant compte du deuxième code d'identification de paquet.

2. Procédé selon la revendication 1, dans lequel, avant ou lors d'au moins une des opérations de transfert, un processus de décision a lieu pour déterminer si un paquet fait partie de la partie des paquets dans lesquels au moins un objet de marchandise se trouvant dans le paquet est mis à la disposition d'un destinataire pour être prélevé, mais un transfert du paquet est empêché, de sorte que le paquet n'est pas transféré au destinataire, ou si le paquet fait partie d'une autre partie des paquets qui sont transférés au destinataire respectif dans l'opération de transfert.
